(19) Europäisches Patentamt
European Patent Office
Office européen des brevets

(11) **EP 3 659 249 B1**

(12) **EUROPEAN PATENT SPECIFICATION**

(45) Date of publication and mention
of the grant of the patent:
**11.08.2021 Bulletin 2021/32**

(51) Int Cl.:
**H02N 1/04** (2006.01)

(21) Application number: **17771700.6**

(22) Date of filing: **11.09.2017**

(86) International application number:
**PCT/EP2017/072742**

(87) International publication number:
**WO 2019/020204 (31.01.2019 Gazette 2019/05)**

(54) **TRIBOELECTRIC GENERATOR, METHOD FOR MANUFACTURE THEREOF AND ELEMENTS THEREOF**

TRIBOELEKTRISCHER GENERATOR, VERFAHREN ZU SEINER HERSTELLUNG UND ELEMENTE DAVON

GÉNÉRATEUR TRIBOÉLECTRIQUE, PROCÉDÉ POUR SA FABRICATION ET ÉLÉMENTS DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.07.2017 PCT/EP2017/068810**

(43) Date of publication of application:
**03.06.2020 Bulletin 2020/23**

(73) Proprietor: **Cambridge Enterprise Ltd.**
**Cambridge, Cambridgeshire CB2 1TN (GB)**

(72) Inventors:
• **KAR-NARAYAN, Sohini**
**Cambridge**
**Cambridgeshire CB3 0FS (GB)**
• **CHOI, Yeonsik**
**Cambridge**
**Cambridgeshire CB3 0FS (GB)**

(74) Representative: **Mewburn Ellis LLP**
**Aurora Building**
**Counterslip**
**Bristol BS1 6BX (GB)**

(56) References cited:
• **SIWEN CUI ET AL: "Conducting polymer PPy nanowire-based triboelectric nanogenerator and its application for self-powered electrochemical cathodic protection", CHEMICAL SCIENCE, vol. 7, no. 10, 27 June 2016 (2016-06-27), pages 6477-6483, XP055458945, United Kingdom ISSN: 2041-6520, DOI: 10.1039/C6SC02562E**
• **CAO ET AL: "Template-based synthesis of nanorod, nanowire, and nanotube arrays", ADVANCES IN COLLOID AND INTERFACE SCIENCE, ELSEVIER, NL, vol. 136, no. 1-2, 13 December 2007 (2007-12-13), pages 45-64, XP022388945, ISSN: 0001-8686**

**Description**

## BACKGROUND TO THE INVENTION

### Field of the invention

The present invention relates to triboelectric nanogenerators, and to a method for the manufacture of triboelectric nanogenerators.

### Related art

The rapidly growing demand for energy solutions for autonomous, wireless, portable and wearable electronic devices has prompted great interest in environment-friendly energy harvesting devices. In this respect, harvesting energy from ubiquitous mechanical vibrations can provide a viable power solution for these devices such as wireless sensors that may be implanted within the body for healthcare monitoring, or embedded within structures for early fault detection [Ref. 1]. Mechanical-to-electrical conversion can be achieved via electrostatic and electromagnetic generators, as well as through piezoelectric materials [Refs. 1, 2]. A more recent approach has been through the use of triboelectric generators based on contact electrification and electrostatic induction between materials having dissimilar electron affinities [Refs. 3, 4]. If two materials with different electron affinities make contact, the resulting charge transfer causes the material which gains charge to become negatively charged, and the other material which loses charge becomes positively charged; a phenomemon known as contact electrification. When the two materials are separated, if there is no conducting path between the two surfaces, then these surfaces are able to maintain their induced charges as static electricity; this process is called electrostatic induction. A periodic potential difference can thus be generated across the materials as a result of a periodic relative motion between the two. Maximising the surface area over which the charge transfer takes place enhances the effect, and thus several nanostructuring routes have been adopted to achieve this, resulting in many different kinds of triboelectric "nanogenerators" (TENGs) that have been reported over the past few years [Refs. 5-9].

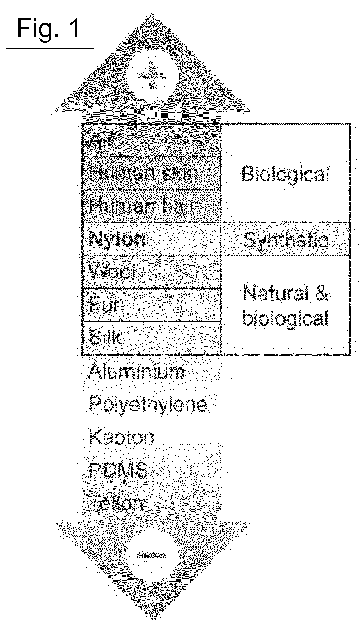

For an efficient TENG device, the appropriate pairing of materials should be considered. Versions of empirical "triboelectric series" have enabled such selection through careful consideration of the positions of different materials with respect to one another in the series [Refs. 3, 10, 11]. Although the sequence of this triboelectric series can be affected by many variables, such as electron affinity, surface structure, and dielectric permittivity, etc., materials on the positive and negative series tend to consist of negatively charged and positively charged molecules, respectively [Refs. 12, 13]. As a result, TENG devices based on pairs of materials located on the extreme opposite ends of the triboelectric series are expected to show superior mechanical energy harvesting capability. Interestingly, the majority of the research to date has almost exclusively focused on tribo-negative materials, in other words, electron-accepting materials, such as polytetrafluoroethylene (PTFE) [Ref. 4]. These have been paired with aluminium or copper as the tribo-positive or electron-donating counterpart, even though these metals are not located on the extreme positive end of the triboelectric series. This is because the vast majority of materials on the positive side of the triboelectric series are biological or natural materials, such as human skin and cotton, and have relatively low mechanical stiffness and/or shape controllability [Ref. 14]. An indicative triboelectric series is illustrated in Fig. 1.

Document "Conducting polymer PPy nanowire-based triboelectric nanogenerator and its application for self-powered electrochemical cathodic protection", CHEMICAL SCIENCE, vol. 7, no.10, June 2016, pages 6477-6483, from SIWEN CUI ET AL, discloses a triboelectric generator having all the features of the preamble of claim 1.

## SUMMARY OF THE INVENTION

Nylon, however, as shown in Fig. 1, is an example of an exception among tribo-positive materials, being synthetic in nature with excellent mechanical properties that allow for easy control of its shape and subsequent integration into TENG devices. Therefore, the present disclosure is based on an investigation into Nylon as a potential tribo-positive candidate, seeking to enhance TENG performance and extend the range of TENG application.

There have been a few reports where Nylon has been used as a tribo-positive material [Refs. 15-17], but these studies have focused on even-numbered Nylons, such as Nylon-6 or Nylon-66, showing only slightly better output performance than other tribo-positive materials such as silk or aluminium [Ref. 18].

Odd-numbered Nylons, such as Nylon-11, exhibit ferroelectric properties because of the dipole orientation resulting from the arrangement of polyamide molecules within adjacent chains, similar to more well-known ferroelectric polymers such as poly(vinylidene fluoride) (PVDF) and its copolymers [Refs. 2, 19-21]. Compared to these fluorinated polymers, Nylon-11 shows a similar degree of ferroelectric properties, such as dipole moment [Ref. 22] and piezoelectric coefficient [Ref. 23], with the added advantage of higher thermal stability [Refs. 24, 25]. The effect of remnant polarization in the performance of TENG devices based on ferroelectric polymers has been previously studied, whereby a high voltage was applied across the polymer to achieve dipolar alignment along the direction of the applied field. According to these studies, positively poled PVDF and its copolymer films showed more than double the power output when incorporated into TENGs as compared to the un-poled film [Refs. 17, 26]. This is due to an increase in surface charge density as a result of the remnant polarization [Ref. 27]. These studies indicate that poled Nylon-11 may be well-suited for TENG applications through inherent surface charge density modification. However, in order to maximize the required polarization property of this material, extreme processing conditions are required, including mechanical stretching and/or electrical poling process under high voltage (about 140 MV/m), which are major processing issues that need to be addressed.

In order to realise better polarization in Nylon-11, the present inventors have realised that the material should preferably possess a pseudo-hexagonal structure with randomly oriented hydrogen bonds, referred to as the "δ'-phase". This is discussed in more detail below. This structure is considered to be beneficial for aligning the dipole moment [Refs. 28, 29]. This δ'-phase, however, is typically achieved through extremely fast crystallization that is required to avoid the formation of large domain size [Refs. 30-33]. As a result, most of the studies regarding the δ'-phase Nylon-11 have been carried out on films grown via melt-quenching.

Although several alternative techniques, such as spin coating [Ref. 34], vapour deposition [Ref. 35], electrospinning [Ref. 36], thermal annealing [Ref. 37], and adding carbon nanostructures [Ref. 38], have been suggested, most of these reported approaches resulted in a lower crystallinity and/or still require harsh processing conditions, such as high temperature (290 °C) and high voltage (40 kV). Moreover, these methods involve further drawing and electrical poling process to enhance the remnant polarization of the Nylon-11 films [Ref. 23].

Based on the insight developed above, the present inventors have carried out research to reduce, ameliorate, avoid or overcome at least one of the above problems. The present inventors have realised that improved triboelectric generators are possible in which at least one of the triboelectric generator elements comprises a templated array of nanowires of a suitable triboelectric material. This constitutes a general aspect of the present invention. Although the insight developed above related to identification of Nylon-11 as a suitable triboelectric material, the applicability of the developments by the inventors is not necessarily limited to this material or related materials.

Accordingly, the present invention provides a triboelectric generator according to claim 1 having a first generator element and a second generator element, the first and second generator elements being arranged so that relative movement between them generates a potential difference between them due to a triboelectrification effect, wherein:

the first generator element comprises a first triboelectric material having a first electron affinity;
the second generator element comprises a second triboelectric material having a second electron affinity, different to the first electron affinity; and
the first generator element comprises a template structure having an array of channels extending in the template structure, the channels being substantially filled with the first material to define a templated array of nanowires of the first material.

The present invention provides also a method according to claim 13 for the manufacture of a triboelectric generator according to the first aspect, the method including manufacturing the first generator element including the step: a solution of the first material is allowed to fill an array of channels extending in a template structure by capillary wetting and the solvent is removed from the solution in the channels to solidify the first material into an array of self-poled nanowires,
the method further including the step of assembling the first generator element with the second generator element so that relative movement between them generates a potential difference between them due to a triboelectrification effect.

The present invention provides also a method according to claim 15 of operating a triboelectric generator according to the first aspect, the method including causing relative movement between the first and second generator elements to generates a potential difference between them due to a triboelectrification effect.

Preferred embodiments of the invention are defined in the dependent claims.

## BRIEF DESCRIPTION OF THE DRAWINGS

Embodiments of the invention will now be described by way of example with reference to the accompanying drawings in which:

Fig. 1 shows a schematic triboelectric series of common materials, showing tribo-positive materials at the top and tribo-negative materials at the bottom.
Fig. 2 shows a schematic overview of the nanowire fabrication procedure used in preferred embodiments of the invention.
Fig. 3 shows a cross-section SEM image of a nanowire-filled AAO template. White threads indicate the Nylon-11 nanowires, which are stretched during the template breaking process.

Fig. 4 shows an SEM image of template-freed nanowires.

Fig. 5 shows SEM images of a single strand of Nylon nanowire, freed from the template.

The right hand image shows an enlarged view of the region indicated in the left hand view.

Fig. 6 shows, on the left hand side, XRD patterns of nanowire-filled templates crystallized at various assisted gas-flow rates.

Fig. 7 shows, based on the normalized XRD patterns, the average intensity of the peak at 21.6° and 22.6° plotted as a function of assisted-gas flow rate.

Fig. 8 shows, on the left hand side, XRD patterns of a nanowire-filled template (solid line, top), melt-quenched film (dotted line, middle), and silicon background (dashed line, bottom). The inset indicates the orientation of the nanowire-filled template with respect to the x-rays used in XRD. The right hand side of Fig. 8 shows a magnification of the $\delta$'-phase range.

Fig. 9 shows an SEM image of an AAO template structure.

Fig. 10 shows Fig. 9 transformed into the black and white image, to allow image processing.

Fig. 11 shows the symmetry geometry used in simulations of nanowire formation.

Fig. 12 shows a perspective view of the numerical simulation results of turbulence flow generated by assisted gas-flow (3.1 m/s).

Fig. 13 shows a xz-plane view of the numerical simulation results of turbulence flow generated by assisted gas-flow (3.1 m/s).

Fig. 14 shows a plot of the relationship between the velocity of turbulent flow at different heights above the solution surface and assisted gas-flow rate.

Fig. 15 shows a perspective view of the numerical simulation result of heat transfer around the solution-filled nano-pore.

Fig. 16 shows a xz-plane view of the numerical simulation result of heat transfer around the solution-filled nano-pore. There is turbulent flow, and Fig. 16 shows two dominant cooling mechanisms: (i) evaporative cooling and (ii) thermal conductive cooling.

Fig. 17 shows the temperature gradient from the centre of the solution to the air (triangle points) and template wall (circular points). The initial temperature of the Nylon solution and assisted gas were taken to be 70°C and 20°C, respectively.

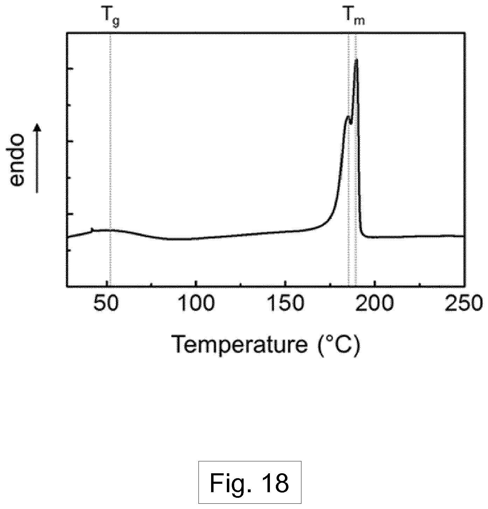

Fig. 18 shows a DSC thermogram of template-freed $\delta$'-phase nanowire during the first heating with glass transition temperature Tg and melting temperature Tm.

Figs. 19A, 19B and 19C show schematic progressive cross sectional views of the polymer crystallisation process in the nano-dimensional pore of the GANT infiltration method.

Fig. 20 shows DSC thermograms for the melt-quenched film (dotted line, top), additionally stretched film (dashed line, second from top), nanowires inside the template (solid line, second from bottom), and template freed nanowires (dot-dash chain line, bottom).

Fig. 21 shows FT-IR absorbance spectra for template-freed nanowires (dotted line) and additionally stretched film (solid line).

Fig. 22 shows a schematic view of the FT-IR sample for the stretched film. The IR spectra direction (red arrow) for the FT-IR measurement with the draw direction of the polymer materials (grey arrow).

Fig. 23 shows a schematic view of the FT-IR sample for the template-freed nanowires mat. The IR spectra direction (horizontal arrow) for the FT-IR measurement with the draw direction of the polymer materials.

Fig. 24 shows KPFM potential images of the melt-quenched Nylon-11 film and the top surface of the self-poled nanowires filled template device.

Fig. 25 shows a plot for the surface charge potential difference of the melt-quenched Nylon-11 film and the self-poled nanowires filled template device. The inset shows KPFM measured surface structure.

Fig. 26 shows open-circuit output voltages of TENGs with different combinations of materials. The output voltage increases from about 40 V in the device with aluminium to about 110 V in the device with $\delta$'-phase Nylon nanowires.

Fig. 27 shows short-circuit output current densities of the same TENGs as in Fig. 26.

Fig. 28 shows the power density of different TENG devices as a function of variable load resistance.

Fig. 29 shows a plot of charge accumulation of the nanowire-based TENG with respect to time. The left top and inset shows the circuit structure for the charge accumulation test. The right bottom inset shows a schematic view of the TENG.

Fig. 30 shows a schematic view of a TENG and various dimensions and parameters exemplified in Table 3.

Figs. 31-34 show the results of simulations on the triboelectric potential difference of three different TENGs.

Figs. 35-37 show the current density plotted against time for operation of three different TENGs.

Fig. 38-40 show the gradual increase and a decrease of voltage and current density across the various load resistors, respectively, for a TENG formed using: a nanowires filled template (Fig. 38); a melt-quenched film (Fig. 39); and aluminium (Fig. 40). In these plots, the power density is calculated by the multiplication of current density squared and load resistance.

Fig. 41 shows an SEM image of a template freed nanowire mat.

Fig. 42 illustrates the random direction of the remnant polarisation.

Fig. 43 shows an SEM image of region "b" of Fig. 41.

Fig. 44 shows an SEM image of region "c" of Fig. 43.

Fig. 45 shows the $V_{OC}$ performance of a TENG formed using a template freed nanowire mat.

Fig. 46 shows the Jsc performance of a TENG formed using a template freed nanowire mat.

Fig. 47 shows TENG performance under various input conditions. Short circuit current density of the nanowire device was measured under the application of a periodic impacting force at variable frequency between 2 Hz and 20 Hz with amplitude of 6 V.

Fig. 48 also shows TENG performance under various input conditions. Short circuit current density of the nanowire device was measured under the application of a periodic impacting force at different amplitude between 3 V and 12 V with frequency of 5 Hz. Note that in the energy generator system, force amplitude of the magnetic shaker can be controlled by the applied voltage.

Fig. 49 shows the results of fatigue testing, carried out by recording the short circuit current density over time in response to continuous impacting at a frequency of 5 Hz and amplitude of 6 V on the same Nylon-11 nanowire based TENG device for 30 h (about 540,000 cycles impacting cycles in total). Data were recorded after 2 h (18 k cycles), 5 h (90 k cycles), 10 h (180 k cycles), 20 h (360 k cycles), and 30 h (540 k cycles).

Fig. 50 shows TENG device performance under various humidity conditions. The maximum (upper line) and minimum (lower line) peak of short circuit density were collected at certain humidity, the right hand image illustrating the collection of these maximum and minimum values.

Fig. 51 shows SA-CNFs formed inside an AAO template observed in cross section. The arrow shows that SA- CNFs have been pulled off (inset shows a closer view) along with the thin cellulose film due to strong cohesion between cellulose layers.

Fig. 52 shows a close up view of SA-CNFs as observed to have stretched and thinned due to pulling out from the nanopore channels (marked by white arrows).

Fig. 53 shows separated SA-CNFs obtained after dissolution of the AAO template. The inset shows an individual SA-CNF.

Fig. 54 shows an SEM image of tangled SA-CNFs obtained after dissolving the uncured CNC filled template.

Fig. 55 shows a TEM image revealing the self -assembly of CNCs (shown with dotted arrow) to rod-like cellulose clusters (shown by double arrowheads) within a SA-CNF.

Fig. 56(a)-56(d) show TEM image of different SA-CNFs: Fig. 56(a) reveals a helicoide structure; Fig. 56(b) and Fig. 56(c) show preferential orientation of rod-like cellulose clusters at an acute angle with respect to the SA-CNF axis; and Fig, 56(d) shows a further magnified view of the boxed area in Fig. 56(c) showing individual CNC (about 5 nm in diameter) well integrated into SA-CNF and the rod-like clusters having larger width between 10-20 nm and lengths >100 nm.

Fig. 57 shows a TEM image of parent CNCs.

Fig. 58 shows XRD spectra of SA-CNFs before and after annealing in comparison with standard cellulose 1B pattern.

Fig. 59 shows DSC spectra of SA-CNFs with reference to the bulk cellulose spectra as extracted from Ref. C48.

Fig. 60 shows a schematic arrangement of a triboelectric generator for testing.

Fig. 61 shows a second triboelectric generator element for use with the arrangement of

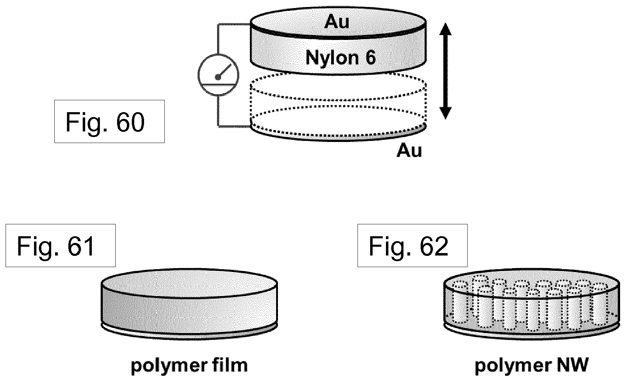

Fig. 60, the generator element comprising a polymer film.

Fig. 62 shows a second triboelectric generator element for use with the arrangement of

Fig. 60, the generator element comprising polymer nanowires in a template.

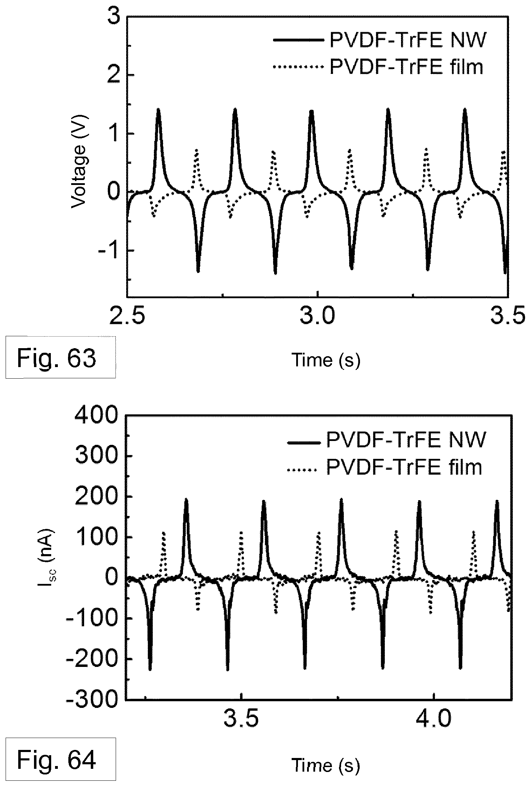

Fig. 63 shows the open circuit voltage and Fig. 64 shows the short-circuit current measured and compared for the arrangement of Fig. 60, where the second generator element comprises a PVDF-TrFE film and where the second generator element comprises PVDF-TrFE nanowires.

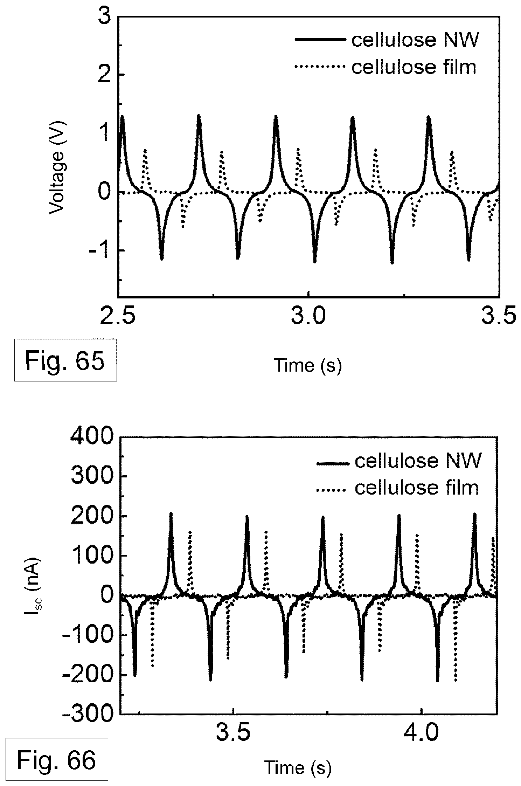

Fig. 65 shows the open circuit voltage and Fig. 66 shows the short-circuit current measured and compared for the arrangement of Fig. 60, where the second generator element comprises a cellulose film and where the second generator element comprises cellulose nanowires.

## DETAILED DESCRIPTION OF THE PREFERRED EMBODIMENTS, AND FURTHER OPTIONAL FEATURES OF THE INVENTION

### Introduction - nylon nanowires

Triboelectric nanogenerators (TENGs) have emerged as potential candidates for mechanical energy harvesting, relying on motion-generated surface charge transfer between materials with different electron affinities. In order to achieve suitable levels of energy harvesting performance, and considering the triboelectric series illustrated schematically in Fig. 1, materials with electron-donating tendencies have not been studied sufficiently in the past. It is important to study these because they are far less common than electron-accepting counterparts. Nylons are notable synthetic organic materials with the electron-donating property, with odd-numbered Nylons such as Nylon-11, exhibiting electric polarization that can further enhance the surface charge density that is considered to be important to TENG performance.

The fabrication of Nylon-11 in the polarized $\delta$'-phase typically requires extremely rapid crystallization, such as melt-quenching, as well as "poling" via mechanical stretching and/or large electric fields for dipolar alignment.

In the preferred embodiment of the present invention described below, there is disclosed a one-step fabrication process for forming a templated array of nanowires suitable for use as a TENG element. The preferred material provides enhanced surface charge density of highly crystalline "self-stretched" and "self-poled" $\delta$'-phase Nylon-11 nanowires using a novel, facile gas-flow assisted nano-template (GANT) infiltration method. As will be explained in more detail below, when incorporated in a TENG, these Nylon-11 nanowires showed a ten-fold improvement in output power density as compared to a conventional aluminium based TENG device, under similar mechanical excitation.

The embodiment uses a one-step, near room-temperature method. In this disclosure, this is termed a gas-flow assisted nano-template (GANT) infiltration method. This promotes the fabrication of highly crystalline "self-poled" $\delta$'-phase Nylon-11 nanowires, the nanowires being formed within nanoporous anodized aluminium oxide (AAO) templates. The reference to "one-step" indicates that there is no need for subsequent processing such as stretching and/or poling. The gas-flow assisted method allows for a controlled crystallization rate that manifests as a rapid solvent evaporation and a suitable temperature gradient within the nanopores of the template. This is predicted by finite-element simulations, resulting in the $\delta$'-phase crystal structure. Furthermore, self-stretching and preferential crystal orientation originating from template-induced nano-confinement effects lead to self-polarization of the nanowires, increasing average crystallinity up to 40%. The self-poled $\delta$'-phase Nylon-11 nanowires show enhanced surface charge distribution when compared to melt-quenched films as observed by Kelvin probe force microscopy (KPFM). Correspondingly, a TENG device based on GANT Nylon-11 nanowires showed a ten-fold increase in output power density compared to an aluminium based TENG device, when subjected to identical mechanical excitations.

Fabrication of Nylon-11 nanowires

Calculated wt% Nylon-11 (Sigma-Aldrich, [-NH(CH$_2$)$_{10}$CO-]$_n$) solutions were prepared in the solvent formic acid (Sigma-Aldrich, Reagent grade $\geq$ 95%) at 70°C. When observing the nanowires using the GANT method, 25 mm diameter AAO templates (Anopore, Whatman) with a diameter of 200 nm and thickness of 60 $\mu$m were placed on an 800 $\mu$L Nylon-11 solution droplet. To control the crystallization rate of the solution, assisted gas (air) flow was introduced upon the AAO template using a portable mini fan placed immediately next to the floating template. The rate of assisted gas was controlled by fan rotation speed and measured by an anemometer. The whole drying experiment was proceeded under room temperature. Detailed descriptions of the nanowire preparation set-up and treatment were reported previously [Ref. 25]. To obtain the Nylon-11 nanowire arrayed mats, we immersed the nanowire-filled AAO template in a 40 vol% phosphoric acid solution for 4 hr.

Fabrication of Nylon-11 films

Nylon-11 films were produced by quenching the molten film (210 °C) into an ice bath. In the case of stretched films, quenched films were drawn to a draw ratio of 3 at room temperature.

Characterization

The Nylon-11 nanowires were visualized using field-emission scanning electron microscopy (FE-SEM, FEI Nova Nano SEM)). The crystal phase and crystalline quality of the Nylon-11 nanowires inside the AAO template and Nylon-11 films were measured using an X-ray diffraction (XRD) machine (Bruker D8) using Cu K$\alpha$ radiation ($\lambda$ = 1.5418 Åu) with a background silicon substrate. Numerical modeling of gas flow, heat transfer around nano-pores, and the triboelectric effect were achieved by COMSOL Multiphysics.

Differential scanning calorimeter (DSC) was carried out using TA Instruments Q2000 DSC at a scanning rate of 5 °C/minute. Around 2 mg of samples was used and sealed into T zero aluminum DSC pans. Fourier transform infrared (FTIR) was performed using a Bruker Tensor 27 IR spectrometer in the reflection mode. Kelvin probe force microscopy (KPFM) measurements were carried out using Bruker Multimode 8 with Antimony (n) doped Si (tip radius < 35 nm, resonance frequency 150 kHz). AC voltages were applied from a lock-in amplifier. Film thickness was measured by stylus surface profilometer (Veeco Dektak 6M). To study the electrical output performance of the TENG device, a self-made energy harvesting measurement setup [Ref. 41] was utilized, recording the output open-circuit voltage (Voc) and short-circuit current (Isc) by a multimeter (Keithley 2002) and a picoammeter (Keithley 6487), respectively. In the present work, an impacting frequency of 5 Hz with an amplitude of about 1 mm was used. 24 $\mu$m thick Aluminum film and 60 $\mu$m thick melt-quenched Nylon-11 film with the same diameter (about 2 cm) were prepared to compare the TENG device performance with the nanowire one. To make the TENG device, one side of the Nylon-11 NW filled AAO template and the melt-quenched film was coated by sputter coating about 100 nm thick Au (using k550 Emitech) layer.

## Results and discussion - nylon nanowires

Remnant polarization, without the need of subsequent stretching and/or high-voltage poling, is achieved via nanoconfinement during the template wetting process [Refs. 39-41]. This method has been shown to enable self-poling of a ferroelectric polymer through grapho-epitaxial alignment in the lamellae [Refs. 20, 25, 41, 42]. Recent work from our group has shown that the template-induced nanoconfinement led to self-poling in poly(vinylidene difluoride-trifluoroethylene) (P(VDF-TrFE)) nanowires [Ref. 20] as well as Nylon-11 nanowires [Ref. 25], resulting in a highly efficient piezoelectric nanogenerators [Ref. 41]. However, controlling the exact crystal structure through nanoconfinement methods remains challenging, in part owing to the crystal growth initiation site. For a typical template-wetting process where a polymer melt or solution is introduced into the top surface of the template via spin coating, nucleation is initiated from the surface of the bulk solution and propagated into the nano-sized pores [Ref. 43]. Such bulk-initiated nucleation and growth mechanism imposes restrictions on the control of polymer crystallinity, due to the difficulties in controlling the rate of crystallization. We mitigate this problem by using a reverse template infiltration technique with assisted gas flow. Capillary forces allow the target solution to infiltrate from the bottom, directly exposing the solution to air. Furthermore, assisted gas flow enables precise control of the crystallization rate of the Nylon-11 polymer solution, resulting in the desired $\delta$'-phase crystal structure. We note that this phase was not prominent in the XRD diffraction pattern reported in our previous work [Ref. 25] where a more typical template-wetting method was employed. We find that the strong presence of the $\delta$'-phase in Nylon-11 nanowires leads to enhanced surface polarisation, and thus improved control of this crystalline phase through our GANT method is useful in enhancing the triboelectric energy harvesting performance.

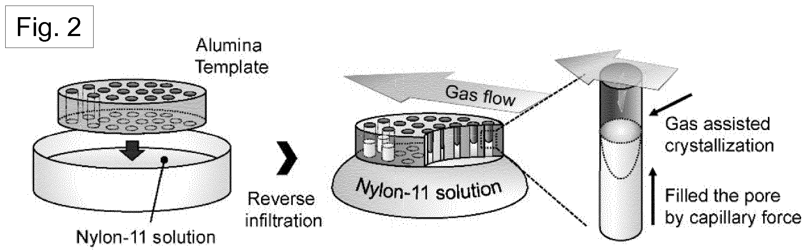

The GANT fabrication procedure is schematically illustrated in Fig. 2. To achieve $\delta$'-phase Nylon-11 nanowires, the AAO template (diameter about 2 cm and thickness about 60 $\mu$m) was placed on top of a 17. 5 wt% Nylon-11 solution in formic acid at 70 °C. At the same time, assisted gas flow (about 3 m/s) was introduced in a direction parallel to the template surface.

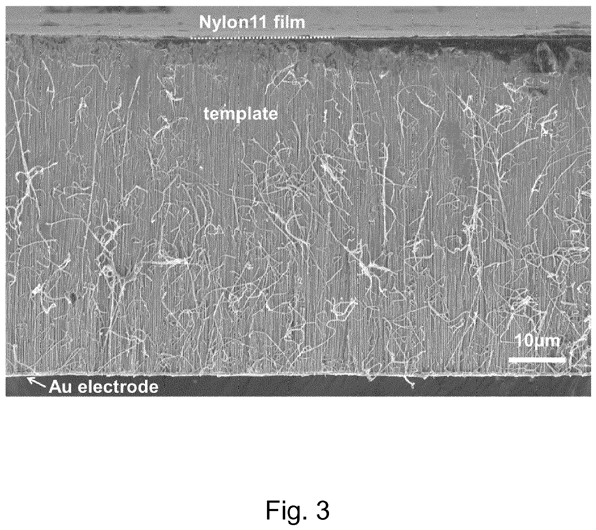

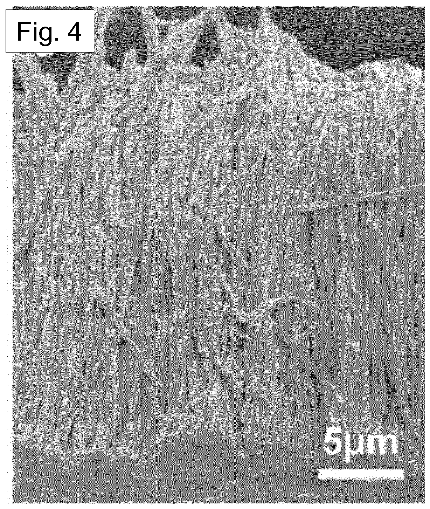

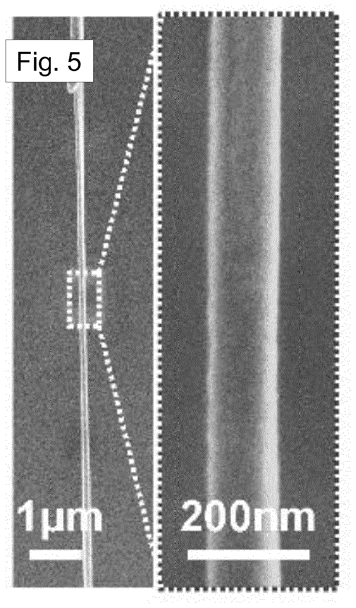

Stretched and entangled Nylon-11 nanowire strands (white thread-like regions) were observed in cross-sectional SEM images of a cleaved template - see Fig. 3. The observed deformation of the nanowires in Fig. 3 was a result of the template cleaving process. In contrast, well-aligned nanowire arrays were detected in samples after the template material was dissolved using mild acid. For example, Fig. 4 shows an SEM image of nanowires freed from the template. A single nanowire strand has uniform width and length of 200 nm and 60 $\mu$m respectively, which are similar to the dimensions of the AAO template pore channels. Fig. 5 shows an SEM image of an individual nanowire, at low (left hand image) and high (right hand image) magnifications.

## Gas-flow assisted crystal structure control

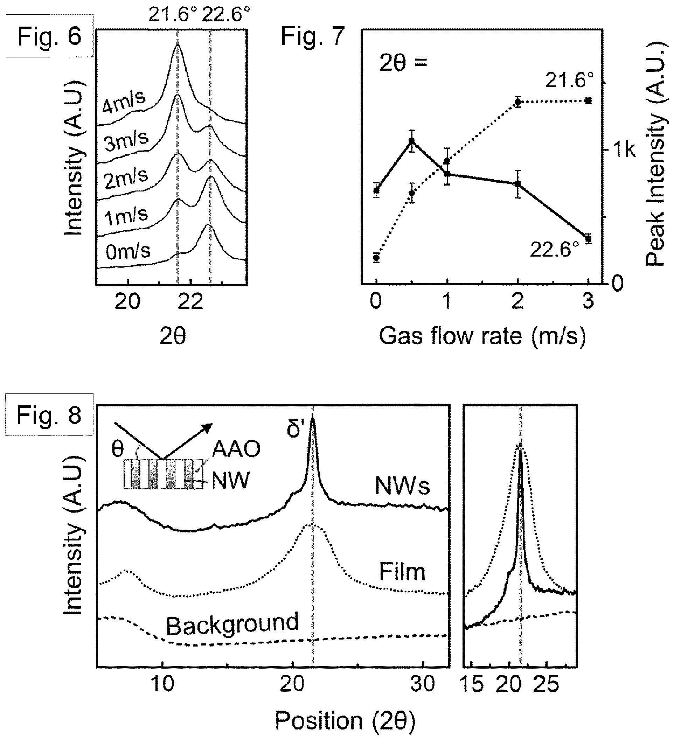

Detailed crystal structural characterization was subsequently carried out by X-ray diffraction (XRD, Bruker D8). At room temperature, a melt-quenched film with pseudo-hexagonal $\delta$'-phase typically showed broader reflection peak at 2$\theta$ of about 21.6° corresponding to (hk0) plane, which is merged planes of (100), (010), and (110) [Ref. 44]. However, without assisted gas-flow, Nylon-11 nanowires displayed a relatively strong peak at 2$\theta$ = 22.6° with a very weak $\delta$'-phase peak (2$\theta$ = 21.6°). This is shown in Figs. 6 and 7. This diffraction pattern is consistent with our previous result regarding the Nylon-11 nanowire manufactured by a template wetting method [Ref. 25]. The GANT infiltration method allowed control of the crystal structure, wherein we were able to manipulate the rate of crystallization by adjusting the speed of gas flow. As shown in Fig. 6 (left panel), the relative peak intensity of the $\delta$'-phase gradually increased with increasing the rate of assisted gas-flow up to a gas-flow rate of about 3 m/s, without any further increment thereafter. The relative changes in intensities between the peak at 21.6° and peak at 22.6° are depicted in Fig. 7, where the variation in average peak intensities is plotted as a function of gas flow rate. This result indicates that the crystal structure of nano-confined Nylon-11 nanowires could be well-controlled using different gas-flow rate, leading to the formation of pseudo-hexagonal $\delta$'-phase Nylon-11 nanowires. It should be noted that there exists some confusion about the distinction between $\gamma$ and $\delta$-phase of Nylon-11. Based on the recent work of Pepin et al., we identify the $\delta$' phase in our Nylon-11 nanowires which has the required polar characteristics [Ref. 44]. The crystalline phase corresponding to the 22.6° peak is less straightforward to identify as it has not been reported in the literature, though a possible explanation may be that this peak corresponds to the (210/010) plane of triclinic $\alpha$'-phase.

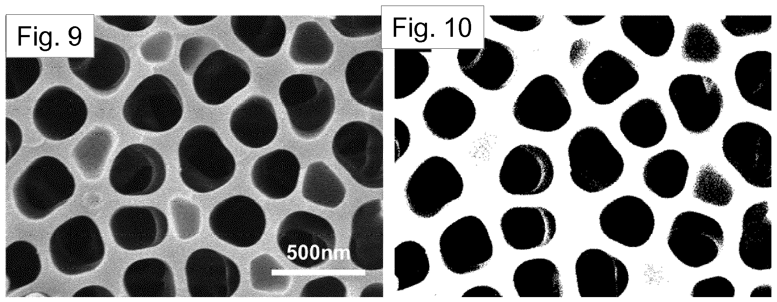

In order to compare the crystallography of the nanowires, melt quenched Nylon-11 films with $\delta$'-phase, were grown. Fig. 8 shows the XRD from both a melt-quenched film and nanowires in the AAO template. While the melt-quenched film showed a relatively broad $\delta$'-phase peak at $2\theta hk0 = 21.6°$, the $\delta$'-phase nanowires that were grown using the GANT method exhibited a $\delta$'-phase peak with small full width at half-maximum. This means that the smectic phase has more organized (pseudo)-hexagonal lattice structure [Ref. 44]. It is to be noted that the volume of nanowires was only about 50% of the film with the same size and thickness. This was determined by imaging the bare AAO template by SEM (Fig. 9) and then transforming this into a black and white image (Fig. 10). The number of black pixels (pores) was counted and divided by the total number of pixels (whole surface area of the template). As a result, the average effective area was calculated to be about 48.25 %. Note that the XRD data for nanowires was taken while the nanowires were still embedded in the AAO template.

It can therefore be surmised that the actual amount of crystalline region in the nanowire per unit area is larger than that of the melt-quenched film. These results suggest that even through the conventional melt-quenching method, the presence of large amorphous regions cannot be prevented in the films due to the thickness of the film and the low thermal conductivity of Nylon [Ref. 33]. However, this problem is mitigated via the GANT method where the $\delta$'-phase in Nylon-11 nanowires is realised to a larger extent.

The crystal structure of Nylon-11 have been extensively studied due to their extensive degree of polymorphism [Refs. S1-S6]. Nylon-11 displays several crystal structures depending on the processing condition as summarised below.

Table 1. Various crystal structures of Nylon-11

| Phase | Unit cell | Processing condition |
|---|---|---|
| $\alpha$ | triclinic | Solution casting using m-cresol |
| $\alpha$' | triclinic | Melt & slow cooling / annealing of $\delta$' |
| $\beta$ | monoclinic | Precipitation from TEG solution |
| $\gamma$ | monoclinic | Solution casting from TFA |
| $\gamma$ | pseudo-hexagonal | Solvent treatment of $\alpha$ |
| $\gamma$' | pseudo-hexagonal | Solvent treatment of $\delta$' |
| $\delta$ | pseudo-hexagonal | High temperature of $\alpha$' |
| $\delta$' | (smectic) pseudo-hexagonal | Melt quenching |

At room temperature, in Nylon-11 there have been demonstrated at least four crystalline forms (the triclinic $\alpha$ and $\alpha$', the monoclinic $\beta$, and the pseudo-hexagonal $\gamma$ phase) and one smectic-like pseudo-hexagonal phase [Ref. 44].

In terms of electrical property, although all Nylon-11 has a polar crystal structure due to its molecular configuration, the electric polarisation can be maximised from a specific type of crystalline phase. In the case of the most stable and well-organized $\alpha$-phase, Nylon-11 does not display remnant polarisation due to the strong hydrogen bond, which is originated from the highly-packed crystal structure. In contrast, the highest electric polarisation could be observed from the meta-stable pseudo-hexagonal phase ($\gamma$, $\gamma$', $\delta$, $\delta$') [Refs. 28, 29, 33]. Disordered, short-range hydrogen bond and breakage of gauche bonding originated from rapid crystallisation are likely to enable dipole reversal [Ref. 33].

Despite disordered configuration in the perpendicular direction to the chain and randomly oriented hydrogen bonds, pseudo-hexagonal phase shows more ordered crystalline structure along the chain direction, which was referred to be a smectic-like phase, with aligned amide groups [Ref. S11].

The crystallization mechanism initiated by the GANT method was verified using finite element analysis using COMSOL Multiphysics.

Using COMSOL Multiphysics simulation, the simulation is demonstrated based on these three different effects: the turbulent flow of the assisted gas, heat transfer in all components, and the vaporisation of the solvent in the Nylon solution. For the turbulent flow, we assumed that the gas flow rate and pressure field are independent of the property of gas, such as moisture content level and temperature. Heat transfer in the model is considered to have two different aspects: conduction and convection. The heat transfer between the template wall and the solution is governed by conduction. In the gas flow, the heat transfer is originated from the convection and the effect of turbulent flow. The cooling effect during the solvent evaporation needs to be considered as well based on the heat of vaporisation $H_{vap}$. To calculate the amount of vaporised solvent to the air, the material transport equation is used with the turbulent flow as a diffusion coefficient.

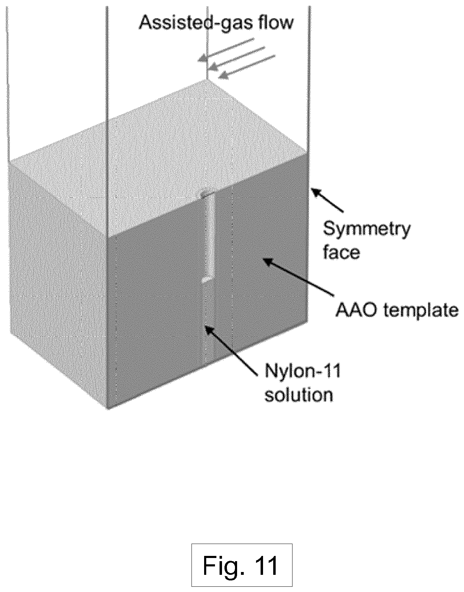

Fig. 11 illustrates the symmetry used in the COMSOL Multiphysics simulation. The geometry was built based on the experimental conditions. The inner diameter and thickness of the nanopore is 200 nm (measured from SEM images) and 100 nm, respectively. The height of the nanopore is assumed 5 $\mu$m filled with 70°C formic acid with $H_{vap}$ of 23.1 kJ/mol. The assisted gas is air with an initial temperature of 20°C and enters to the right side of the geometry.

The inlet velocity of the turbulent flow was set by the gas flow rate.

To further investigate the rapid crystallization process from the polymer solution, both the solvent evaporation and temperature of the solution have been considered. In terms of solvent evaporation, our simulations revealed that through the assisted gas-flow, the artificially generated dry and cool turbulent air flow effectively encourages the evaporation of the solvent.

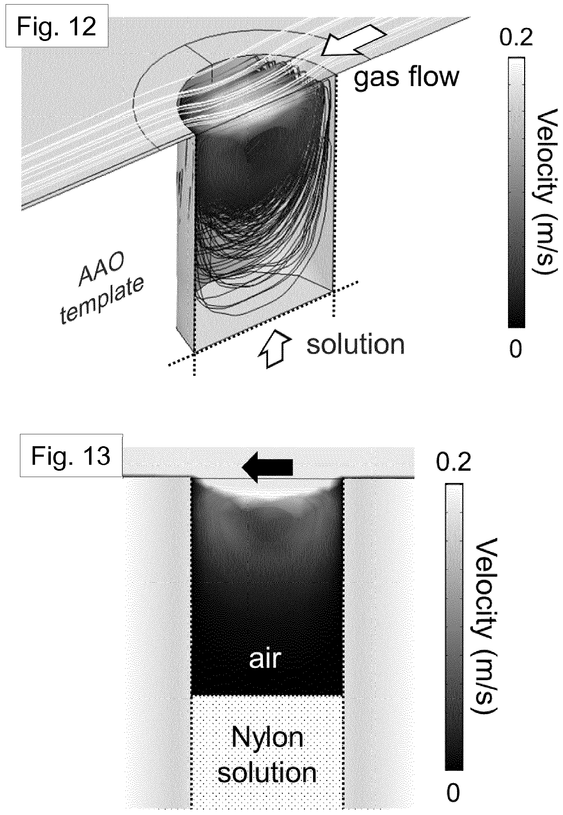

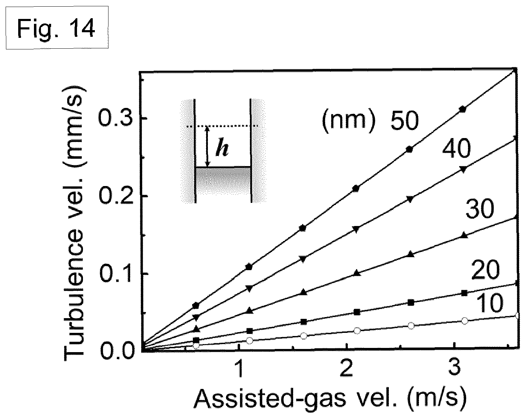

Figs. 12 and 13 show shows the induced turbulent flow by assisted gas within the nanopore channels. Fig. 14 shows that the speed of the induced turbulent flow increases with increasing assisted gas-flow velocity.

The velocity of the turbulence, evaluated 10 nm above the surface of the solution, was 36 $\mu$m/s for an assisted-gas velocity of 3.1 m/s. This is a high flow rate considering the size of nanopores are about 200 nm in diameter. As a result, nucleation can be initiated at the surface of the exposed solution by rapid solvent evaporation.

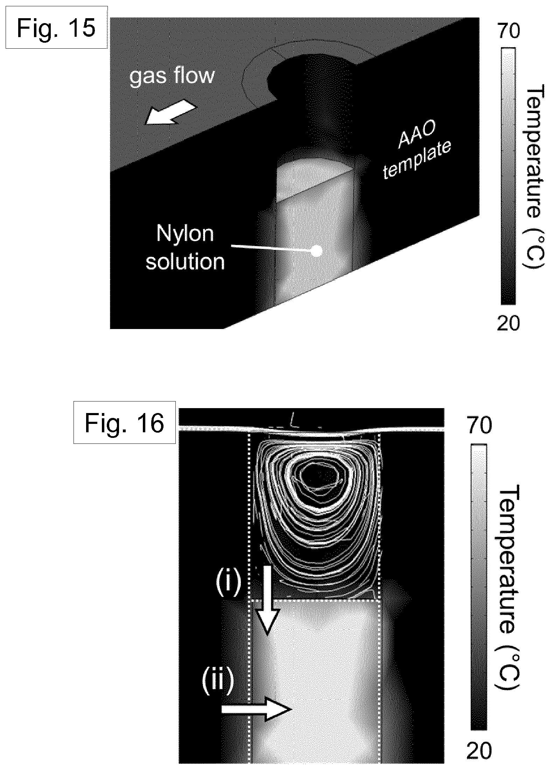

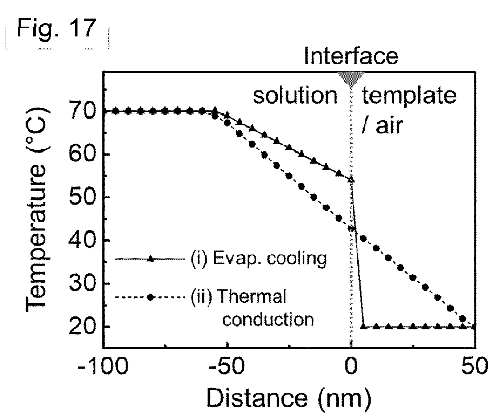

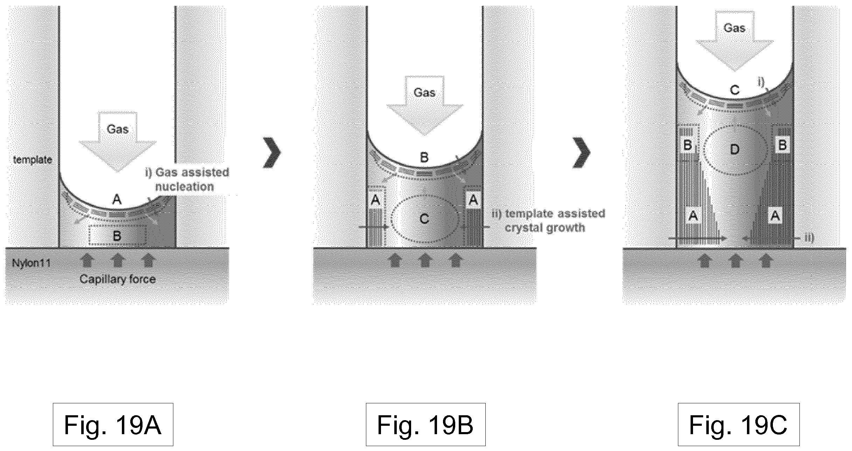

In the computational model, we also considered the effect of the solution cooling within the pore channel: both turbulent flow induced evaporative cooling and thermal conductive cooling via the nano-template walls. The overall cooling mechanism is demonstrated in Figs. 15 and 16, with the turbulent flow around the exposed Nylon solution and heat transfer through the pore walls. As a result of cooling, a temperature gradient is generated both on the top surface and side of the Nylon solution. Fig. 17 shows the significant temperature gradient which is produced by evaporative cooling and thermal conduction as a function of the distance from the top and side surface of the solution, respectively. The crystal growth direction can be inferred from these heat transfer simulations, as the growth of the crystalline region is most likely to occur in the direction of the largest temperature gradient (see Figs. 19A-19C). In addition, considering the crystal growth direction of the GANT method, due to the size of the nano-pores, the crystal growth length (about 100 nm) can be limited as compared to the melt-quenched film (about 30 $\mu$m), resulting in extremely rapid nucleation and growth. This is illustrated by the schematic illustrations of Figs. 19A, 19B and 19C showing the polymer crystallisation process in the nano-dimensional pore of the GANT infiltration method. Therefore, fast crystallization is achieved within the confines of the nanopores, even with mild external conditions, such as low gas flow rate (3 m/s) and near-room temperature conditions.

Self-poled $\delta$'-phase nanowires through GANT method

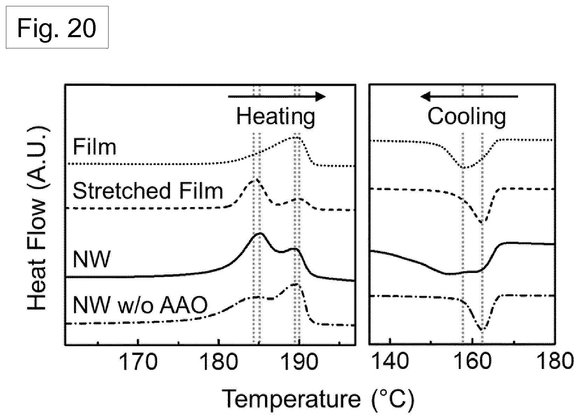

Differential scanning calorimetry (DSC) was carried out to determine the thermal and structural properties of Nylon-11 nanowires as shown in Fig. 20, from which the melting temperature (Tm) and the melt crystallization temperature (Tc) were recorded. To investigate the drawing effect within the template pores, as-received melt-quenched films, stretched melt-quenched films and template-freed nanowire mats were also prepared. During the heating cycle, a single melting peak at 190 °C was observed in the melt-quenched film corresponding to the $\delta$'-phase crystal formation [Refs. 34, 44]. In contrast, a significant change of melting points was obtained from the additionally stretched film as compared to the non-stretched film. The stretched film showed a dominant melting peak at 184.5 °C with a minor melting peak (190 °C), showing an increase in crystallinity from 29 % to 40 % [Ref. 32].

Using the average data of the four distinct DSC peaks of Nylon-11, the crystallinity was calculated by means of the equation

$$\text{Crystallinity (\%)} = \frac{\Delta H_m}{\Delta H_m^0} \times 100 \ (\%)$$

where $\Delta H_m$ and $\Delta H_m^0$ are the equilibrium heat of fusion enthalpies of the semi-crystalline Nylon-11 samples and the perfect crystalline Nylon-11 ($\Delta H_m^0$ is about 189 J/g) [Ref. 48], respectively. $\Delta H_m$ is achieved from the area under the DSC melting peak. The results of the calculations are given in Table 2 below.

Table 2 - Enthalpy of fusion and degree of crystallinity of various morphologies of Nylon-11

|  | Film | Stretched film | Nanowire |
| --- | --- | --- | --- |
| $\Delta H_m$ (J/g) | 54 | 76 | 74 |
| Crystallinity (%) | 29 | 40 | 39 |

Typically, the degree of crystallinity of melt-quenched films is usually around 30% since the rate of crystallisation is very fast compared to other polymers [Refs. 33, 48]. The crystallinity of $\delta$'-phase nanowires is similar to the crystallinity of stretched film due to the self-stretching effect.

Returning now to a consideration of Fig. 20, the formation of a new low-temperature melting peak and improved crystallinity may indicate the additionally aligned molecular chain structure developed by the mechanical stretching process [Ref. 45]. During the cooling cycle, similar to the melting point shift described above, we found that stretched films crystallize at higher temperatures (162°C) compared to the non-stretched film (158°C) due to a more ordered crystal structure.

The thermal properties of the nanowires can be explained on the basis of several factors: nanowire size effect, nano-template effect and crystal ordering effect. Both nanowires within the template, as well as those freed from the tempate displayed double melting behaviour. The additional low temperature melting peak can be explained by nanoscale size effect. According to the Gibbs-Thomson equation [Refs. 46,47], the melting point depression ∆T_m is given by

$$\Delta T_m = T_m - T_m(d) = 4\sigma_{sl}T_m/(d\Delta H_f\rho_s)$$

where $T_m$ is the normal (bulk) melting point, $T_m(d)$ is the melting point of crystals of size d, $\sigma_{sl}$ is the surface tension of the solid-liquid interface, d is particle size, $\Delta H_f$ is the bulk enthalpy of fusion (per g of material), and $\rho_s$ is the density of the solid [Ref. 46]. This shows that the melting point of the nanowires was depressed due to the nano-confined structure and surface tension of the Nylon-11/template interface.

From nanowires in the template, the dominant melting peak was observed at a lower temperature (185 °C), as compared to the template-freed nanowires which displayed dominant melting peaks at a higher temperature (190 °C). This is because, in case of nanowires in the AAO template, both the very thin nanowire diameter as well as the surface tension between Nylon-11 and the nano-template interface affect the melting behaviour [Ref. 46]. In the cooling cycle, the nano-template effect was confirmed by the relatively broader crystallization temperature of the nanowire in the template. Thermal behaviour of template-freed nanowires, however, makes us infer an additional effect that influences the property of the nanowires. This is because cooling behaviour of template-freed nanowires and stretched film are substantially similar and have the same Tc (162 °C). In addition, the δ'-phase nanowires displayed much higher degree of crystallinity (39 %) than those of the melt-quenched film (29 %) [Refs. 33, 48]. The crystallinity of the δ'-phase nanowire is rather similar with those of stretched film (40 %), even though those nano-confined structure showed much lower latent heat of fusion $\Delta H_m$ [Ref. 47]. All of these phenomena suggests that, during the GANT process, δ'-phase nanowires were likely to have experienced crystalline ordering. Similar to the molecular alignment from the film-drawing process, grapho-epitaxial alignment originating from the template-pore walls resulted in highly ordered structure, giving rise to similarities in the thermal behaviour and high crystallinity observed in the stretched film. Our results indicate that the GANT method successfully enabled highly ordered δ'-phase nanowires to be formed without additional drawing process.

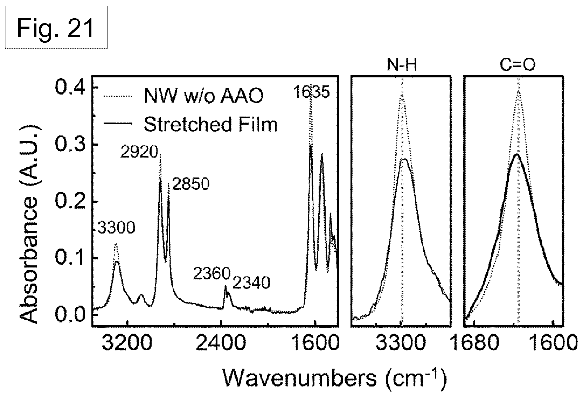

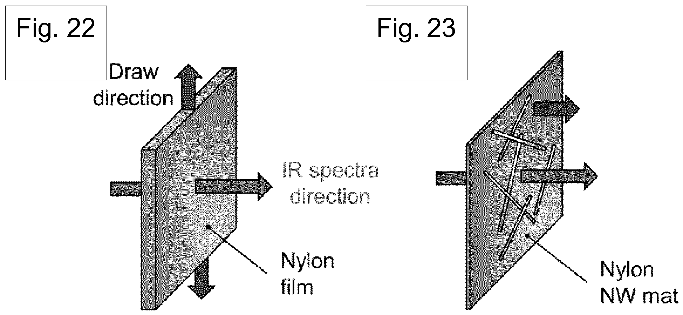

The molecular bond structure of δ'-phase nanowires was measured using room temperature Fourier transform infrared (FT-IR) spectroscopy and the results shown in Fig. 21. A template freed δ'-phase nanowire mat [Ref. 25] and stretched film were prepared to confirm the preferential crystal orientation originating from nano-confinement. For more detailed analysis, the direction of the infrared spectra for drawing should be considered since the peak intensity can be changed depending on the chain alignment in the draw direction [Ref. 49]. Considering the drawing direction, parallel and perpendicular direction infrared absorption spectra were measured from δ'-phase nanowires and stretched film, respectively (Figs. 22 and 23). According to the literature, FT-IR spectra of Nylon-11 have two important regions related to dipole alignment. The region 1500-1700 cm⁻¹ contains the amide I and II mode and is assigned to hydrogen-bonded or free amide group. The band at 3300 cm⁻¹ (amide A peak) is assigned to N-H stretching vibration and is sensitive to the hydrogen bond [Refs. 31, 34, 50]. The region 1500-1700 cm⁻¹ is shown in Fig. 21 for both stretched film and nanowires, containing the amide I and amide II bands. In this region, two materials show similar intensity except for 1635 cm⁻¹ band because the conformation in the amorphous phase is expected to be the same [Ref. 34]. The 2920 and 2850 cm⁻¹ bands of both materials are assigned to the antisymmetric and symmetric $CH_2$ stretching modes of the methylene groups, respectively. The significant differences in the absorption intensities of the N-H stretching modes at 3300 cm⁻¹ and C=O stretching modes at 1635 cm⁻¹ show direct evidence for the self-polarization in the nanowires. The parallel direction absorbance peak in the template-freed nanowire mat was found to be higher for both bands compared to the perpendicular direction peak intensity of the stretched film. Considering the relatively higher peak intensity in the perpendicular direction spectra and peak intensity rise in the parallel spectra due to the electric poling process [Refs. 29, 49], the higher intensity of the nanowire mat suggests that nanowires obtained from the GANT method have preferential crystal orientation.

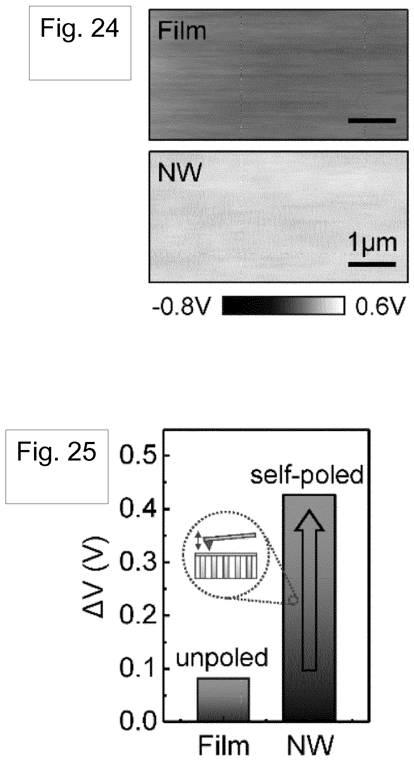

In order to investigate the direction of polarization and quantify the surface charge variations between Nylon-11 nanowires and melt-quenched films arising from the self-poled nature of the former, we employed Kelvin probe force microscopy (KPFM), where the surface charge potential difference between the material and an atomic force microscope (AFM) tip can be measured. The results are shown in Figs. 24 and 25. Melt-quenched Nylon-11 film showed the surface potential difference of 82 mV. In contrast, the higher surface potential (426 mV) was observed from the self-poled δ'-phase nanowire-filled template. Furthermore, the enhanced surface charge potential difference of self-poled nanowires demonstrates the relationship between polarization and surface charge density. Our results indicate an "upward" direction of polarization, which corresponds to the expected charge donating property.

Nylon-11 Nanowire based TENG device

A TENG device was fabricated using self-poled nanowires embedded within AAO template. The bottom side of the AAO template was coated by an Au electrode (about 100 nm thickness), and an Au-coated Teflon film was prepared as a counterpart substrate. Aluminium films and melt-quenched Nylon-11 film were also prepared to compare the device performance with the nanowire-based TENG.

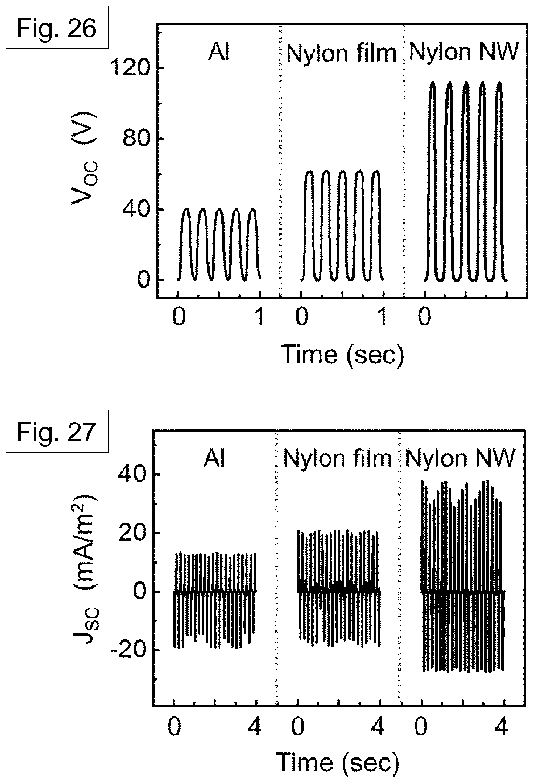

Figs. 26 and 27 show the open circuit voltage ($V_{OC}$) and short circuit current density (Jsc) respectively, measured in response to the periodic impacting at a frequency (f) of 5 Hz and amplitude of 0.5 mm in an energy harvesting setup that has been previously described [Ref. 41]. The aluminium based TENG device showed a peak $V_{OC}$ of about 40 V and a peak JSC of about 13 mA·m$^{-2}$. Following the triboelectric series, higher TENG performance was observed from a melt-quenched Nylon-11 film based TENG with $V_{OC}$ of about 62 V and $J_{SC}$ of about 21 mA·m$^{-2}$ than from the Al based TENG. The self-poled Nylon-11 nanowire based TENG displayed further enhanced output performance with a peak Voc of about 110 V and a peak Jsc of about 38 mA·m$^{-2}$ likely due to the self-poled nature of the nanowires.

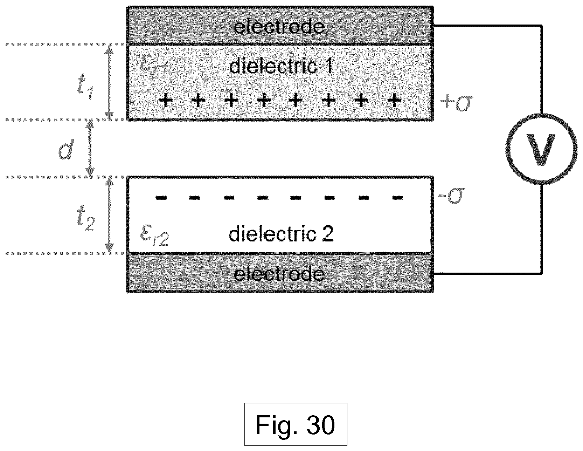

We conducted analytical simulations using a finite element method (FEM) with COMSOL Multiphysics software to further confirm the effects of self-polarization on triboelectric potential. Fig. 30 shows the schematic structure of the TENG device and indicates the dimensions and parameters of the device used in the simulations. Table 3 shows values of the dimensions and parameters used in the simulations.

Table 3 - dimensions and parameters used in simulation of TENG device

| Symbol | Meaning | Value | unit |
|---|---|---|---|
| $d$ | max. separation distance | 0.5 | mm |
| $t_1$ | thickness of PTFE | 100 | $\mu$m |
| $t_2$ | thickness of Nylon film & AAO template | 60 | $\mu$m |
| $S$ | surface area of the electrode | 3.14 | cm$^2$ |
| $V_{OC,Al}$ | $V_{OC}$ of aluminium based TENG | 40 | V |
| $V_{OC,film}$ | $V_{OC}$ of melt-quenched film based TENG | 60 | V |
| $V_{OC,NW}$ | $V_{OC}$ of Nylon NW filled template based TENG | 110 | V |
| $\varepsilon_0$ | vacuum permittivity | 8.85E-12 | F/m |
| $\varepsilon_{r.film}$ | relative permittivity of Nylon-11 film [Refs. 25, 45] | 3.7 | |
| $\varepsilon_{r.AAO}$ | relative permittivity of AAO template | 9 | |
| $\varepsilon_{r.NW}$ | relative permittivity of oriented Nylon [Refs.25, 45] | 4.5 | |
| $\varepsilon_{r.PTFE}$ | relative permittivity of PTFE | 2.1 | |
| $Pr$ | remnant polarization of Nylon-11 [Ref. S15] | 55 | mC/m$^2$ |

To confirm the working mechanism of the self-poled nanowire based TENG, we carried out a theoretical analysis based on Gauss theorem [Refs. S13, 11]. In the dielectric-to-dielectric contact mode TENGs, the electric potential difference ($\Delta$V) between two electrodes can be given by:

$$\Delta V = E_1 t_1 + E_2 t_2 + E_{air} d$$

$$= \left[ -\frac{Q}{S\varepsilon_0 \varepsilon_{r1}} t_1 \right] - \left[ \frac{Q}{S\varepsilon_0 \varepsilon_{r2}} t_2 \right] + \left[ \frac{S\sigma - Q}{S\varepsilon_0} d \right]$$

$$= -\frac{Q}{S\varepsilon_0} \left( \frac{t_1}{\varepsilon_{r1}} + \frac{t_2}{\varepsilon_{r2}} + d \right) + \frac{\sigma d}{\varepsilon_0} \qquad (1)$$

where $E$ is electric field strength, $t_1$ and $t_2$ are the thickness of the two surfaces, $d$ is the distance between two different layers, $Q$ is the value of transferred charges, $S$ is the area of the electrode, $\sigma$ is the triboelectric charge density, $\varepsilon_0$ is the vacuum permittivity, and $\varepsilon_{r1}$ and $\varepsilon_{r2}$ are the relative permittivity (dielectric constant) of dielectric materials, respectively. In the conductor-to-dielectric structure, $t_1/\varepsilon_{r1}$ can be ignored because the metal layer acts as triboelectric layer and electrode.

Under open-circuit conditions, the value of transferred charges ($Q$) become zero since no charge is transferred between the two top and bottom electrodes. Thus, if we assume electric potential of the bottom electrode to be zero, the equation for the open-circuit voltage ($V_{OC}$) can be calculated by

$$V_{OC} = \frac{\sigma d}{\varepsilon_0} \qquad (2)$$

Using experimentally determined $V_{OC}$ of each TENGs, we can obtain a theoretical triboelectric charge density ($\sigma$):

$$\sigma = \frac{V_{oc}\varepsilon_0}{d} \qquad (3)$$

When d is maximum (0.5 mm) and $\sigma$ of aluminium, the melt-quenched Nylon film, and the nanowire-filled template are 0.78, 1.06, and 1.95 $\mu$C m$^{-2}$, respectively.

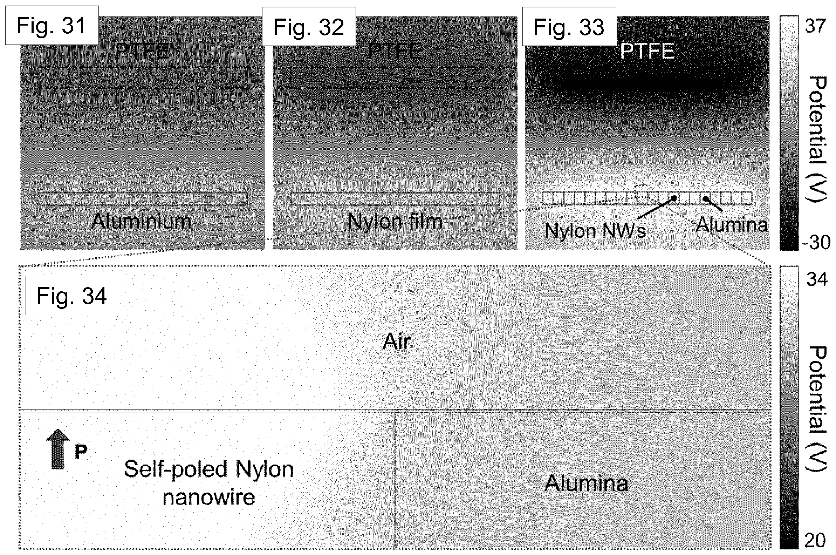

A COMSOL Multiphysics simulation demonstrated the triboelectric potential difference of three different structure TENGs with Teflon as the top part and aluminium (Fig. 31), Nylon film (Fig. 32), and nanowires in the template (Fig. 33) as the bottom parts. Fig. 34 shows an enlarged view of the simulation results for the nanowire-air-alumina interface. In the simulation, we assumed that the length of the dielectric and electrodes are infinite because they are significantly larger than the thickness of the dielectric layer. The nanowire-filled alumina template structure (Fig. 33) was simplified in the simulation, considering the surface area of the nanowires (about 50 %). Because of the charge density ($\sigma$) difference, the nanowire sample shows the highest potential difference between the top and bottom electrodes. In addition, the self-poled Nylon nanowire region exhibits relatively higher electric potential than the alumina template region. This indicates that further enhanced triboelectric performance of nanowire containing AAO template devices is mainly attributed to the self-polarization of the nanowires.

The ideal electric potential of self-poled Nylon-11 nanowire based TENGs can be calculated based on the experimental result of remnant polarisation [Ref. S15]. Under short-circuit conditions ($V = 0$), the transferred charges ($Q_{sc}$) are given by

$$Q_{sc} = \frac{S\sigma d\varepsilon_{r1}\varepsilon_{r2}}{t_1\varepsilon_{r2}+d\varepsilon_{r1}\varepsilon_{r2}+t_2\varepsilon_{r1}} \qquad (4)$$

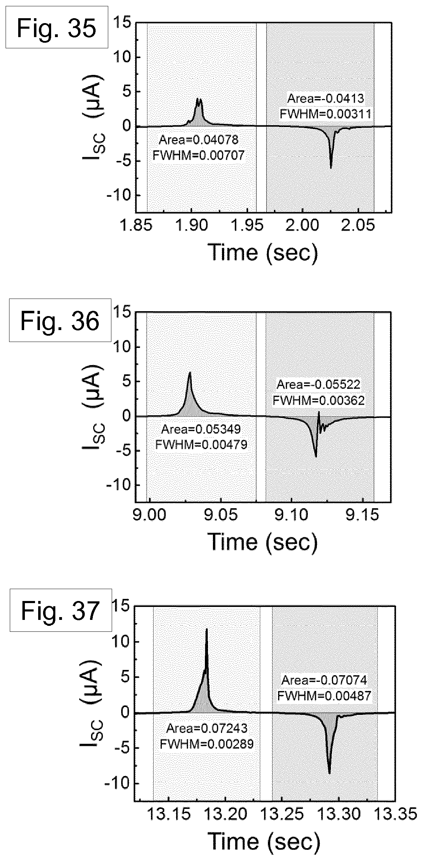

The value of $Q_{sc}$ can therefore be varied as a function of d. When the generator is fully released (d = 0.5 mm), the maximum transferred charges per unit area was theoretically calculated to be 0.65, 0.94, and 1.75 $\mu$C m$^{-2}$ for aluminium, melt-quenched Nylon film, and the nanowire-filled template, respectively. The transferred charges ($Q_{sc}$) are also calculated using the integration of short-circuit current ($I_{sc}$). The short circuit current is shown in Figs. 35, 36 and 37, corresponding to the devices of Figs. 31, 32 and 33, respectively.

Thus, in the work presented here, when compared with the aluminium and Nylon film based TENGs, a higher triboelectric potential is obtained from the self-poled nanowire based TENG, because the self-poled nanowires increase the charge density ($\sigma$) on the electrified surfaces.

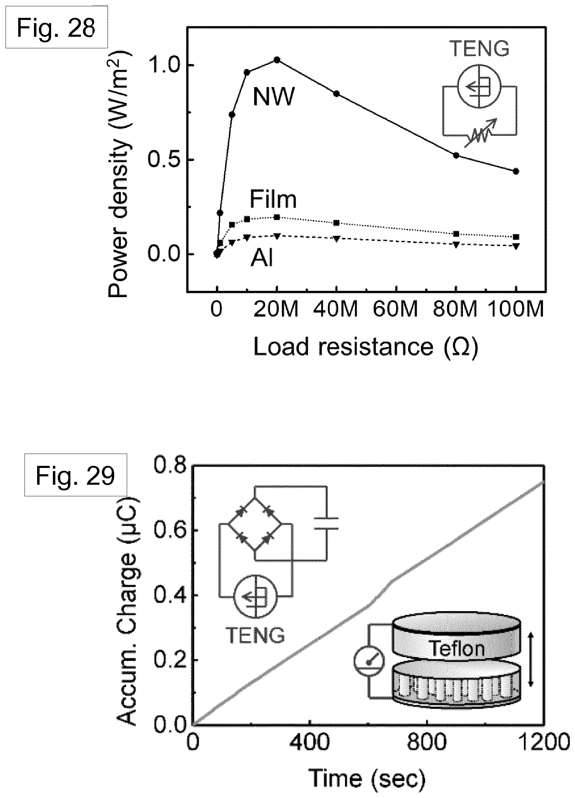

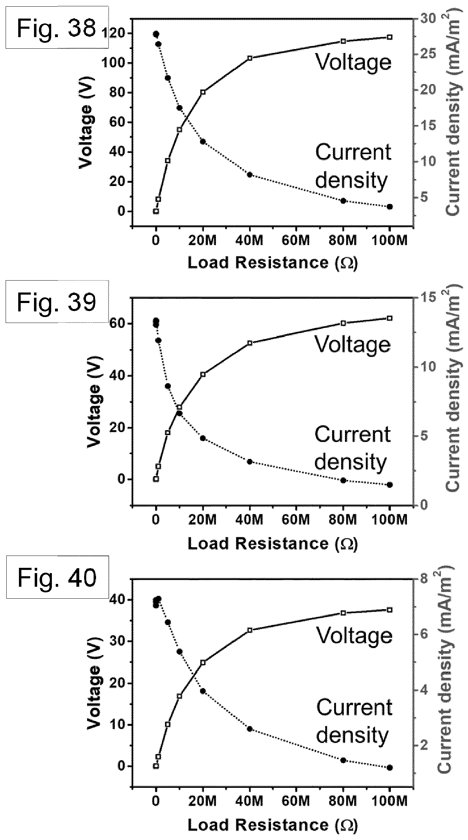

The electrical power output of the TENG was measured across different resistors. Peak output power density of 1.03 W·m$^{-2}$, 0.19 W·m$^{-2}$, and 0.099 W·m$^{-2}$ were observed from the Nylon-11 nanowire, Nylon-11 (melt-quenched) film, and aluminium based device respectively under impedance-matched conditions at a load resistance of about 20 M$\Omega$ (Fig. 28 and Fig. 38 (nanowire-filled template), Fig. 39 (melt-quenched film) and Fig. 40 (aluminium)). The observed output power from the nanowire based TENG was about 6 times and about 10 times higher than those of a melt-quenched Nylon-11 film and aluminium based TENG, respectively. Such remarkable improvement in the output performance of $\delta$'-phase nanowires can be rationalized as follows: the self-polarization of the nanowires can be expected to give rise to larger surface charge density, which can result in more transferred charges compared to the film surface. It should be noted that the surface area of the nanowires is only about 50 % as compared to the melt-quenched film. This indicates that polarization in the nanowire effectively further enhances the surface charge density of the device.

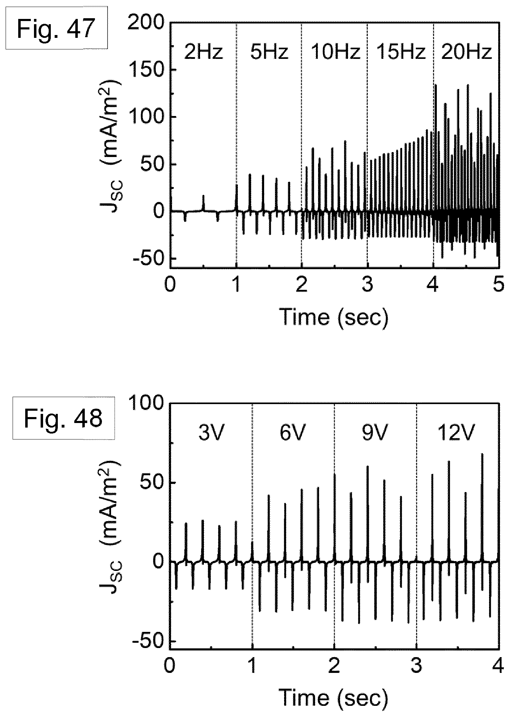

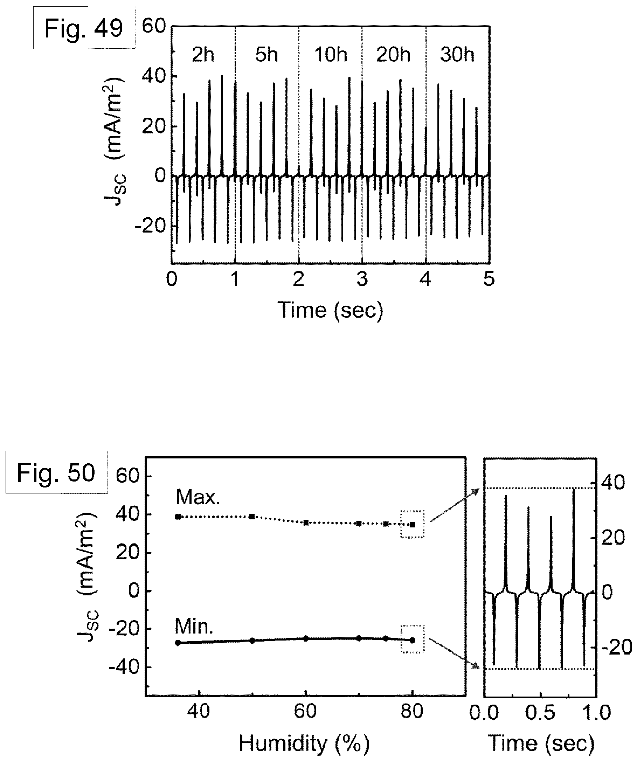

The electrical output was found to increase with increasing impact frequencies and amplitudes (see Figs. 47 and 48). In addition, fatigue testing was carried out by continuously impacting the device for up to 30 hours at 5 Hz (about 540,000 cycles). Fig. 47 shows that the Nylon-11 nanowire-based TENG device exhibited negligible change in output current density over the entire period of continuous testing. Reliability tests under various humidity conditions were also carried out by impacting the Nylon-11 nanowire based TENG device within a humidity-controlled box. (See Figs. 49 and 50). Although Nylon is known to be prone to degradation in the presence of moisture, the Nylon-11 nanowire-based TENG showed reliable output performance up to high humidity condition (about 80 %), indicating that the AAO template serves to encapsulate and protect the nanowires from environmental factors.

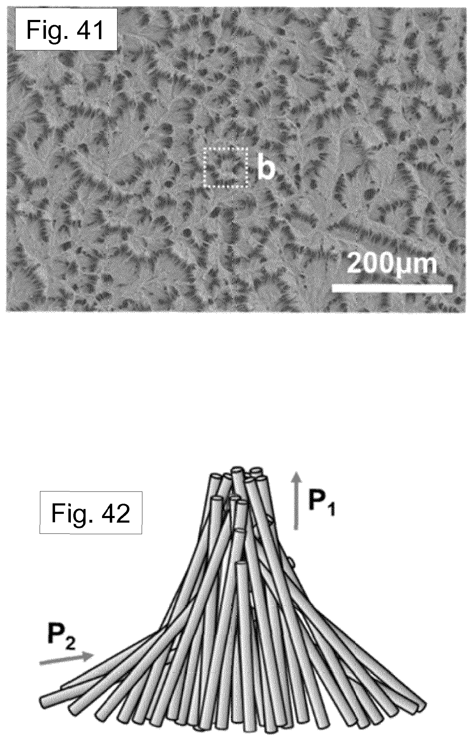

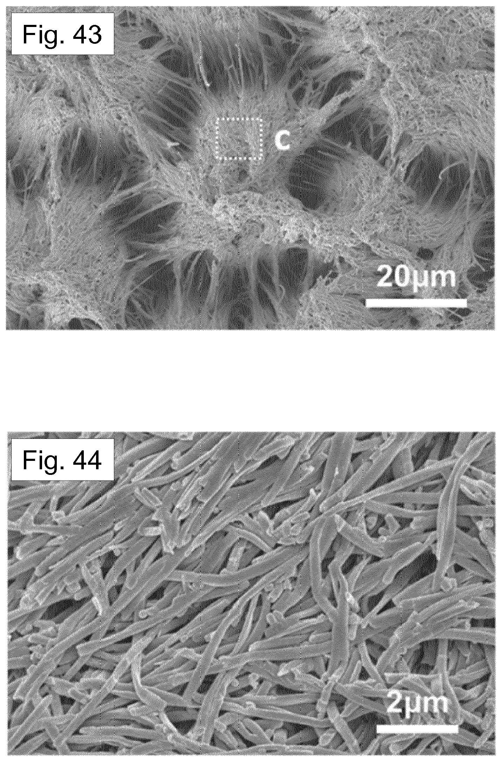

To further confirm the effect of self-polarization on TENG devices, we also measured the output performance of the template-free nanowire mat where the nanowires are lying on the substrate with randomly oriented polarization directions. Fig. 41 shows an SEM image of a template freed nanowire mat. Fig. 42 shows a schematic view of the area indicated as "b" in Fig. 41. The arrows in Fig. 42 indicate the local direction of the remnant polarisation, based on which it can be seen that there is no overall preferred direction for the remnant polarisation. Fig. 43 shows an enlarged SEM view of the area indicated as "b" in Fig. 41. Fig. 44 shows an enlarged SEM view of the area indicated as "c" in Fig. 43.

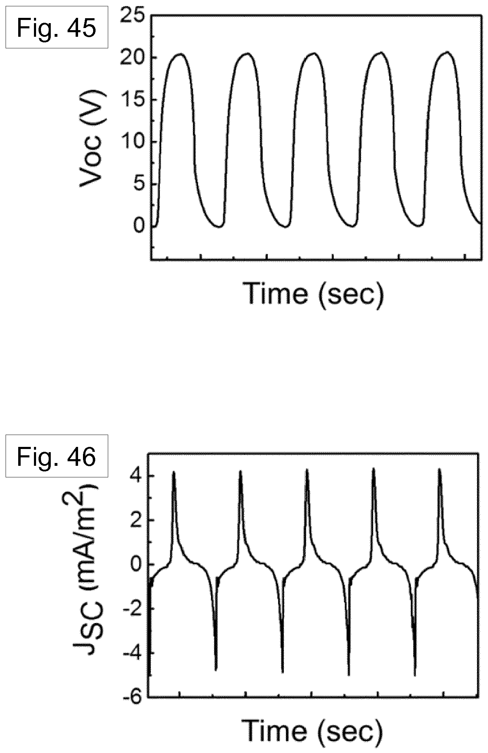

Figs. 45 and 46 show the output performance of the nanowire mat based TENG device. Interestingly, the template-freed nanowire mat-based TENG device generated suppressed output performance ($V_{OC}$ = 20V and Jsc = 4.0 mA·m$^{-2}$), even though it was thinner and had a larger effective surface area. Due to the randomly oriented polarization in the nanowire mat, the generation of triboelectric charges was likely inhibited during the contact and separation process. These results support the orientation directed polarization effects in the Nylon-11 nanowires while they are still aligned and embedded within the template.

To confirm the energy generated by the $\delta$'-phase nanowire, TENG is also feasible for energy storage. As illustrated in Fig. 29, a 470 $\mu$F capacitor was connected to the device using a full-wave bridge rectifying circuit. The Nylon nanowire based TENG under mechanical pressure at 5 Hz for about 20 minutes successfully charged the capacitor with a charging speed of about 38 $\mu$C·min$^{-1}$. Notably, the accumulated charge increased with time as shown in Fig. 29, suggesting the Nylon nanowire-based TENG had excellent stability. In a demonstration, the electric power produced by the Nylon nanowire based TENG was used to directly turn on several commercial light-emitting diodes (LEDs). During contact and separation with 5 Hz frequency, 36 white LEDs were driven by the produced output voltage without the need for external energy storage devices.

## Conclusions - nylon nanowires

To summarize, we have demonstrated for the first time, a novel and facile gas-flow assisted nano-template (GANT) infiltration method for the fabrication of highly oriented, self-poled $\delta$'-phase Nylon-11 nanowires, as a rarely synthesized tribo-positive material. Assisted gas-flow controlled the crystallization speed, resulting in the $\delta$'-phase crystal structure. Preferential crystal orientation originated from the nano-confinement effect in the template, resulting in self-poling of the Nylon-11 nanowires with an increased average crystallinity of up to about 40%. When self-poled Nylon-11 nanowires were combined with counterpart tribo-negative surfaces, such as Teflon, the resulting output power were observed to be about 6 times and about 10 times higher than those of melt-quenched Nylon-11 film and aluminium based TENGs, respectively. The output power generated by the Nylon-11 nanowire-based TENG device was high enough to drive commercial electronic components such as LEDs and capacitors without external power sources. It is therefore now possible to provide enhanced surface charge density for TENG elements for use in high-performance TENG devices.

The present invention is not necessarily limited to nylon materials or to Nylon-11 specifically. The inventors have conducted additional investigations into other materials that are suitable for use in embodiments of the present invention, whether as tribo-positive materials or tribo-negative materials.

## Cellulose nanowires

Cellulose, a major constituent of our natural environment and a structured biodegradable biopolymer, exhibits inherent shear piezoelectricity. It has therefore been studied by the inventors' research group with a view to its potential applications in energy harvesters, biomedical sensors, electro-active displays and actuators. Here are disclosed self-assembled cellulose nanofibers (SA-CNFs), also referred to here as cellulose nanowires, fabricated using a template-wetting process, whereby parent cellulose nanocrystals (CNCs) introduced into a nanoporous template bunch together to form rod-like cellulose clusters, which then assemble into SA-CNFs. Subsequent thermal annealing is found to enhance crystallinity, hardness and shear piezoelectric response, as observed using quantitative nanomechanical mapping (QNM) and non-destructive piezo-response force microscopy (ND-PFM). The inventors have found a distinct chiral-nematic hierarchical structure in their template-grown SA-CNFs as revealed by scanning electron microscopy (SEM) and high resolution transmission electron microscopy (TEM).

It is considered that oriented cellulose crystallites are responsible for the observed piezoelectricity of wood due to stress-induced orientation of dipoles, possibly stemming from the OH groups in cellulose molecules. Recently, thick 45$\mu$m films of cellulose nanofibrils were reported for their use in piezoelectric sensors with corresponding vertical sensitivities of 4.7-6.4 pC/N in ambient conditions [Reference C31].

SA-CNFs were fabricated from an aqueous dispersion of CNCs using a simple template-wetting method (drop-cast) on an AAO template, followed by a low-temperature annealing process. SA-CNFs were formed from CNCs which above a critical aqueous concentration, exhibit left-handed chiral nematic (cholesteric) liquid crystallinity as observed by transmission electron microscopy (TEM). The SA-CNFs displayed helicoidal arrangement of rod-like cellulose clusters, where the helicoidal axis follows the longitudinal axis of the pores of the anodised alumina (AAO) templates used. SA-CNFs showed higher crystallinity resulting in enhanced mechanical properties attributed to annealing, as determined using QNM on individual SA-CNFs. PFM scans further show evidence of preferential arrangement with single SA-CNFs.

(In recent years, QNM and PFM have emerged as advanced scanning probe tools used to assess the mechanical and electromechanical properties of materials at the nanoscale respectively.)

As explained below, it is possible, by confinement in a suitable template, to promote self-assembly of cellulose nanocrystals into nanofibers. This is unexpected, since the cellulose nanocrystals would be expected to repel one another rather than self-assemble due to their surface charge. Such self-assembly is not seen in bulk conditions. It is considered that the nanoconfined environment of the template forces the self-assembly, which then leads to a degree of polar alignment along the nanofiber. This polar alignment manifests as an enhanced triboelectric effect due to this self-assembly.

It is in general considered that any polymeric material that is capable of sustaining a surface charge will work suitable as a triboelectric material in the context of the present invention. Suitable polymers include ferroelectric polymers are a good example, though they may need to be poled if they are not self-poling. Other polar materials also work in this way. Advantages related to templated polymeric nanowires are (1) better crystallinity, (2) self-poling (relevant particularly for ferroelectrics) and (3) texturing/alignment of polar molecules.

Materials and Methods - cellulose NWs

*Materials Preparation:*

*Extraction and stabilization of CNCs as aqueous suspension.* Cellulose nanocrystals (CNCs) were extracted according to the procedure by Beck-Candanedo et al. [Ref. C60]. The source material for the suspension was bleached, softwood Kraft pulp (TEMBEC). TEMBEC board was cut into strips and dried overnight at 50 °C. The strips were mixed with sulfuric acid and stirred at 45 °C for 45min, at the ratio of 1:17.5, 40g TEMBEC with 700 mL sulfuric acid (64%). Then, the sample was diluted 10 times in cold double distilled water (DDW), and the mixture was left standing for 1 hour. The acidic upper phase was decanted and discarded, and three wash cycles were performed on the bottom phase according to the following sequence per cycle: the material was centrifuged (20 °C, 6K rpm, 10 min), the supernatant was discarded, and the pellet was rinsed with DDW. The pellet from the final cycle was collected with the addition of DDW, and dialyzed against DDW until the pH of the suspensions stabilized. Finally, the suspension was sonicated (Q500 Qsonica; 6 mm probe) on ice to avoid overheating, until the suspension appeared uniform (15 kJ/g). The sonicated suspensions were filtered (Whatman 541) and toluene (100 $\mu$L/L) was added to the suspensions to avoid bacterial growth.

*Preparation of cellulose nanofibers.* SA-CNFs were prepared by template-based drop-cast wetting method from an aqueous dispersion of CNCs. In the process, charged CNC dispersion (1.25 %) is pooled on top of the anodised aluminium oxide (AAO) porous template (Anapore, Whatman) with nominal pore diameters of about 250 nm and of thickness 60 $\mu$m. The suspension pool of the CNC dispersion is then allowed to infiltrate the pores by gravity. The template was then left under ambient conditions, allowing the evaporation of water and self-assembly of CNCs within the pore channels. Post-heat treatment of the infiltrated template at approximately 80 °C was carried out for 30 minutes to remove bound water and to facilitate the increase in the degree of bonding between CNCs. SA-CNFs are released from the template by dissolving the AAO template in 3.2 molar potassium hydroxide aqueous solution, followed by repeated washing with deionised water, and centrifugation to neutralise and isolate the SA-CNFs for further characterisation.

Following the guidance set out above for nylon nanowires, it is also possible to form cellulose nanowires by infiltration of the aqueous dispersion of CNCs upwards through the template.

*Characterisation & Measurement Techniques:*

The phase and crystalline quality of the SA-CNFs was characterized by X-ray diffraction (XRD, Bruker D8 diffractometer, equipped with Lynx Eye position-sensitive detector and using Cu K$\alpha$ radiation ($\lambda$ = 1.5418Å)). Peak shifts due to sample misalignment were adjusted while performing the XRD scans and background correction was solved by using a zero background silicon substrate for collecting the scans. Morphological analyses were systematically studied by scanning electron microscopy (SEM, FEI Nova NanoSEM). Differential scanning calorimetry (DSC) measurements of the samples were carried out using a Q2000 TA Instruments differential scanning calorimeter. High resolution transmission electron microscopy (HR-TEM) of CNC and SA-CNFs were acquired using a FEI Tecnai T12 G2 Spirit Cryo-TEM and FET Tecnai T20 STEM equipped with Gatan Imaging Filter, respectively. For cryo-TEM of CNCs, 0.1 wt. % sample were placed on a carbon grid and vitrified (rapid freezing) in liquid ethane using a Vitrobot Mark IV (FEI Company) and cryogenically transferred in liquid nitrogen to the cryo-TEM holder, which was then inserted into the microscope (FEI Tecnai T12 G2 Spirit). The temperature of the sample was maintained at approximately -175 °C to prevent crystallization of ice. The goal of this method is to directly observe the nanoparticles as they exist in aqueous suspension. For standard room temperature TEM of SA-CNFs, released nanofibers were drop cast on copper grids and imaged alternatively between 100-120 kV at 3 spot-size to avoid destruction of the SA-CNFs by electron beam.

AFM measurements were carried out using a *Bruker* multimode 8 (with Nanoscope V controller). Several scanning modes were used: 1) tapping mode using an MESP- RC V2 (*Bruker*) tip for topographic measurements; 2) QNM measurements were carried out with a DDESP-V2 tip, where deflection sensitivity was calibrated using a sapphire standard, and elastic modulus was then calibrated on a polystyrene film standard of known elastic modulus (2.7 GPa); 3) PFM measurements were performed by adapting the QNM mode to yield PFM data, in a non-destructive intermittent contact mode (ND-PFM). Calibration of the ND-PFM signal was carried out by scanning a periodically poled lithium niobate reference with a reported $d_{33}$ = 7.5 pmV$^{-1}$. An MESP-RC V2 tip was used for ND-PFM scanning atop the dispersed NFs, which were lying on a conducting indium tin oxide (ITO) substrate. An alternating voltage of amplitude 4.0 V at a frequency 125 kHz was applied between the sample and the tip.

## Growth and morphology of self-assembled cellulose nanofibers

Structurally, cellulose chains are linear and usually aggregation occurs via both intra- and intermolecular hydrogen bonds. With a strong affinity to itself and toward materials containing hydroxyl groups, CNCs can easily self-assemble in water. Rod-like CNCs with only a few nanometer of lateral dimensions show right-handed chiral twisting along the rods. The formation of hydrogen bonds at the cellulose/water interface is also observed to be highly dependent on the orientation of the CNCs in the chains, and it has been argued that significant contribution from Van der Waals forces contribute to the strong cohesive energy within the CNC network. In this work, to fabricate SA-CNFs, charged CNCs within an aqueous dispersion were drop-cast onto AAO templates facilitating self-assembly of CNCs within the nanoporous channels.

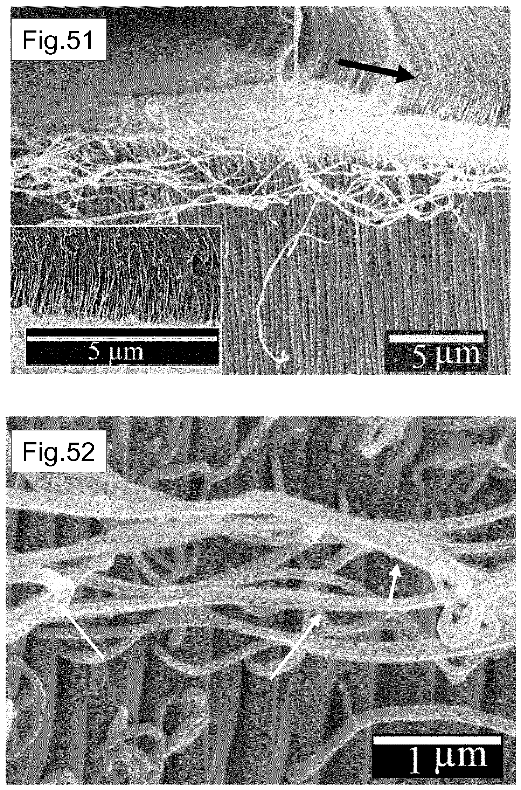

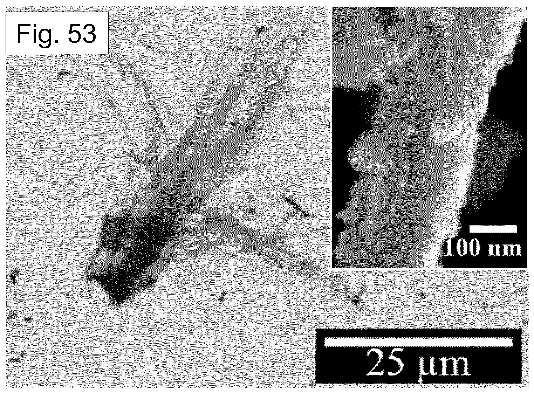

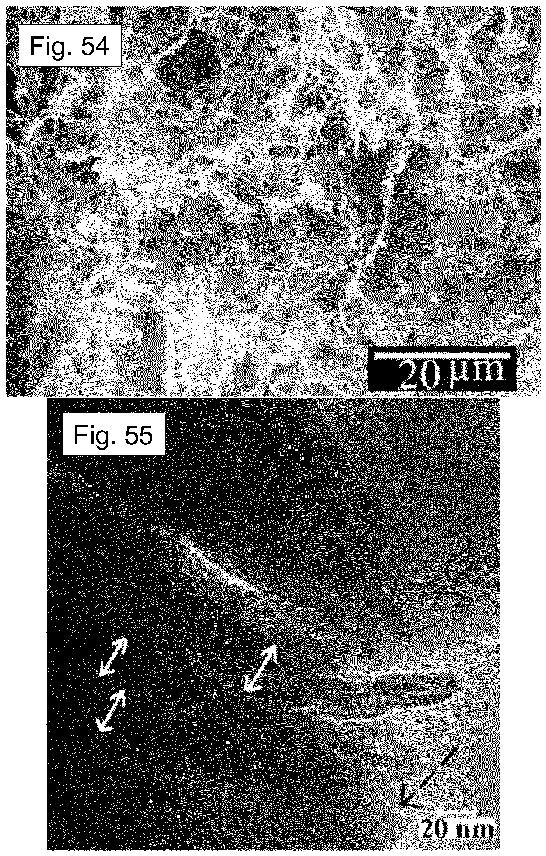

Following an annealing process to remove the adsorbed water molecules, SEM imaging of an intentionally fractured AAO template revealed well-formed SA-CNFs, as shown in Fig. 51. Noticeably, the SA-CNFs were found to remain attached to the residual cellulose film from the template-wetting process (described in more detail below and shown by arrow in the SEM image in Fig. 51), even when they had been pulled out of the template, (inset of Fig. 51), which suggests strong cohesion within the cellulose molecules. While pulling, the SA-CNFs were found to have been stretched considerably, and hence appear to have a smaller lateral dimension (50-100 nm) than the AAO template pore size (about 250 nm), which is a known phenomenon observed for polymer NWs pulled out of their host templates (Fig. 52). In some extreme cases, the stretched-out SA-CNFs were found to stick together to form thin tape-like geometry (with one dimension around 40-60 nm) as observed from Fig. 52. Dissolution of the AAO template released the SA-CNFs, as shown in the back-scattered SEM image in Fig. 53. However, re-dispersion of the SA-CNFs in aqueous solution caused tangling of the SA-CNFs due to adsorption of water and subsequent re-structuring (see Fig. 54). Low- temperature post-deposition annealing process was found to be necessary to realise SA-CNFs of higher crystallinity and improved mechanical stability, which are considered to be of importance to obtain better piezoelectric response, for example, in cellulose. Note that Fig. 53 indicates that well separated SA-CNFs of length of about 50 μm could be reliably obtained following the dissolution of the annealed templates. A single SA-CNF when closely observed showed rough surface texture (Fig. 53, inset), with a lateral dimension (about 225 nm) closely matching the nominal pore size of the AAO template.

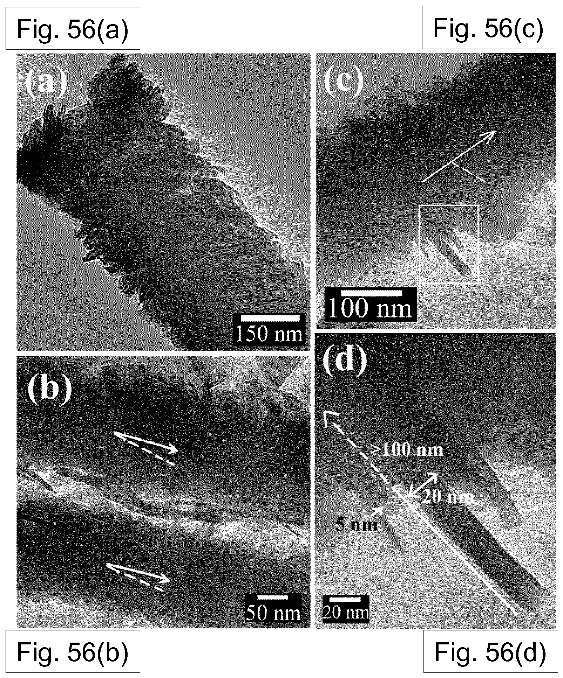

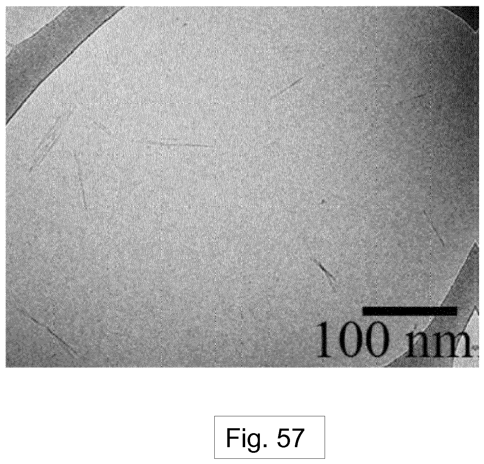

TEM images of individual SA-CNFs revealed the presence of helicoidal structure (Fig. 56(a), possibly a result of locking of the left-handed chiral nematic (cholesteric) liquid crystallinity of CNC. Self-assembly of CNCs to larger rod-like clusters of width between 10-20 nm assembling to form SA-CNFs could also be observed from the TEM images in Figs. 56(b) and 56(c). As indicated by arrows in Figs. 56(b) and 56(c), preferential alignment of these rod-like CNC clusters were found at an acute angle (between 26° and 45°) with respect to the SA-CNF axes. Higher resolution TEM image of protruded rod-like geometry from SA-CNF revealed well integrated CNCs within these rod-like clusters (Fig. 55). High resolution imaging (Fig. 56(d)) shows individual CNCs (about 5nm in width as shown in Fig. 56(d) and in Fig. 55 and Fig. 57, and the larger rod-like cluster with a width of about 20 nm and length >100 nm (also see Fig. 55). Well-ordered cellulose chains of width about 1 nm for a single chain as observed in the rod-like structure corresponds to that reported for cellulose 1B. We therefore believe that a hierarchical self-assembly process was at play, involving the transformation of the chiral nematic liquid crystals of CNCs confined in the AAO nano-pore channels, via rod-like clusters, into SA-CNFs upon dehydration during annealing.

Similar rod-like structures have been recently reported from a mixture of charged gold nanoparticles (AuNPs) and CNCs [Ref. C35]. The formation of chiral rod-like structures was obtained by neutralization of the inter-CNC electrostatic forces. In our case, we suggest that the confinement of the CNCs within the nanopore channels forces the self-assembly process to rod-like clusters, and finally to SA-CNFs, which help retain the morphological integrity even after freeing from the template. Although the exact self-assembly mechanism is not yet clear, it might be related to the attraction due to the charged AAO template walls.

## Structural characterization of self-assembled cellulose nanofibers

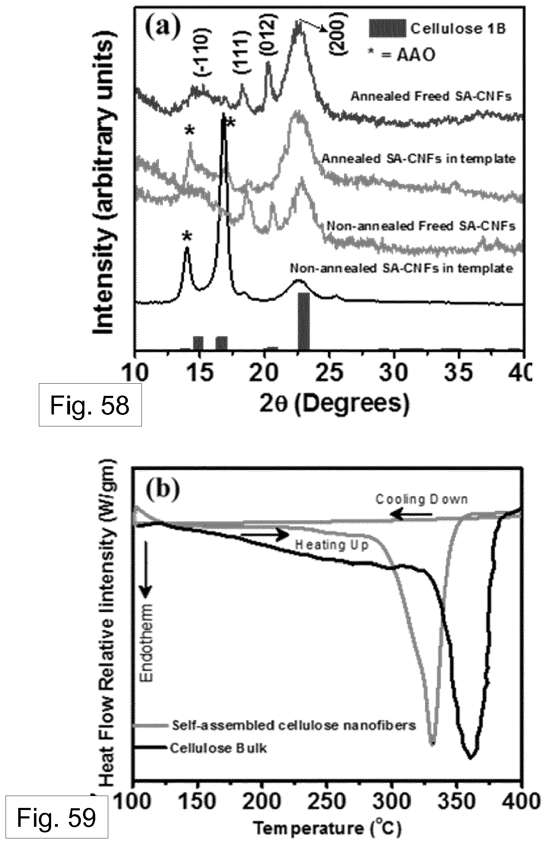

The X-ray diffractometry (XRD) spectra of different SA-CNF samples before and after annealing are shown in Fig. 58. While all the samples did show typical cellulose 1B peaks similar to the parent CNC sample, the degree of crystallinity as calculated from the peak intensities were found to have increased in annealed SA-CNFs with a relative crystallinity index of 0.76, as compared to the non-annealed SA-CNFs with a relative crystallinity index of 0.48. Differential scanning calorimetry (DSC) measurements on the annealed SA-CNFs (Fig. 59) indicated strong stability in the crystalline form, as the SA-CNFs did not melt upon heating, but instead degraded at around 320-390 °C, as also observed for bulk-extracted cellulose [Ref. C48]. The sharp endotherm due to this degradation was readily observed for the annealed SA-CNFs with higher crystallinity (Fig. 59). The latent heat from this peak was 6.0 kJ Kg$^{-1}$ which is lower in comparison to the literature value of 553 kJ Kg$^{-1}$ for bulk cellulose extracted from natural cotton [Ref. C48]. As a result of large surface-to-volume ratio in SA-CNFs, the thermal stability differs significantly as compared to the bulk, leading to a suppression of the melting point as well as a decrease in latent heat for fusion.

## Quantitative nanomechanical mapping of individual SA-CNFs

A wide range of values is often quoted for the Young's modulus of cellulose in the literature which are highly dependent on the degree of fibre alignment. It is expected that the SA-CNFs reported here show lower moduli than bulk cellulose-based materials, as the latter have chains which cross between crystalline regions, while the present SA-CNFs are formed from self-assembled rod-like CNC clusters with no covalent crosslinking between them. Since the bonding between CNCs are primarily intermolecular, this will lead to an intrinsically lower modulus than for covalent bonding. Thus, it is expected that the SA-CNFs will have a modulus more comparable to that of CNC films.

QNM imaging of the SA-CNFs was carried out. Elastic moduli of 1.6 $\pm$ 0.6 GPa and 0.18 $\pm$ 0.05 GPa were respectively obtained for annealed and non-annealed SA-CNFs that were freed from the template and dispersed onto an indium tin oxide (ITO) coated glass substrate. We note that the modulus was extracted by fitting the data to an infinite plane indentation, which might have a fundamentally different mechanical response than cylinder indentation. Nonetheless, the qualitative distinctions between the materials before/after annealing are still valid. Furthermore, based on previous preliminary simulations of this problem regarding the exact geometry of indentation, the fitted values are not expected to deviate significantly from the true value of the modulus. It is therefore clear that the SA-CNF modulus (hence the stiffness) had increased due to the annealing process, which might be due to stronger bonding between constituent CNCs as a result of the release of intra-molecular water. These values are lower than those quoted in the literature for CNC films and suggest there may be weaker bonding between the CNCs in the SA-CNFs than in a CNC film.

## Piezo-response force microscopy studies on individual SA-CNFs

Piezo-response force microscopy studies were carried out on individual SA-CNFs. Overall the results indicated that there is a preferential orientation of CNCs within the SA-CNFs and agrees with the observation of the oriented rod-like cellulose clusters from TEM studies (Figs. 56(a)-56(d)). As discussed above, the preferential orientation is possible due to the porous template-assisted formation.

Thus, the template-wetting technique for cellulose gives rise to a remarkable two-stage hierarchical self-assembly process. In this process, constituent CNCs first form rod-like clusters of larger dimensions which finally assemble into SA-CNFs. The presence of helicoidal structure in a SA- CNF is clearly visualized using TEM, which is a result of locking of the chiral nematic phase of the constituent CNCs. Post-deposition annealing of the infiltrated template enhances the crystallinity and hence the stiffness of the prepared SA-CNFs, as observed by QNM. PFM measurements on individual SA-CNFs are found to be affected by their chirality.

## Additional data on performance of triboelectric generators using different materials

Fig. 60 shows a schematic arrangement of a triboelectric generator used for comparing the performance of various polymer materials for use as the second triboelectric material, in the format of a film and in the format of nanowires.

In the arrangement shown in Fig. 60, the first generator element has a nylon 6 film as the first triboelectric material, backed by a gold film electrode. The second generator element also has a gold film electrode (for example, although other electrode materials may be used). As shown in Fig. 61, in some arrangements (for comparison), the second generator element has a polymer film of the second material. As shown in Fig. 62, in some arrangements (as embodiments of the invention), the second generator element has nanowires of the second material formed in an AAO template.

## PVDF-TrFE

A second triboelectric generator element was formed using PVDF-TrFE. An embodiment of the invention was formed by drop casting a 5wt% solution of PVDF-TrFE in MEK onto an AAO template. For comparison, a second triboelectric generator element was formed by spin coating a PVDF-TrFE film onto ITO coated PET of thickness 1.571 μm. In each case the second triboelectric generator element was assembled with a first triboelectric generator element as shown in Fig. 60 and the generator elements reciprocated relative to each other and the open circuit voltage and short-circuit current (peak-to-peak) recorded. The results are shown in Figs. 63 and 64. Fig. 63 shows the open circuit voltage varying with time and Fig. 64 shows the short-circuit current varying with time. The results in each graph are inverted relative to each other, so that the nanowires performance can be more easily assessed relative to the film performance. These results show that the nanowires of PVDF-TrFE produced an enhanced triboelectric response in comparison with a film of the same composition. It is considered that this effect is due to the confinement of the material in the template inducing surface charge modification of the polymer.

Cellulose

A second triboelectric generator element was formed using cellulose. An embodiment of the invention was formed by drop casting a cellulose dispersion as discussed above onto an AAO template. For comparison, a second triboelectric generator element was formed by spin coating a cellulose film onto a highly p-dope Si wafer. In each case the second triboelectric generator element was assembled with a first triboelectric generator element as shown in Fig. 60 and the generator elements reciprocated relative to each other and the open circuit voltage and short-circuit current (peak-to-peak) recorded. The results are shown in Figs. 65 and 66. Fig. 65 shows the open circuit voltage varying with time and Fig. 66 shows the short-circuit current varying with time. The results in each graph are inverted relative to each other, so that the nanowires performance can be more easily assessed relative to the film performance. These results show that the nanowires of cellulose produced an enhanced triboelectric response in comparison with a film of the same composition. It is considered that this effect is due to the confinement of the material in the template inducing surface charge modification of the polymer.

Poly-L-lactic acid (PLLA)

A second triboelectric generator element is formed using PLLA. An embodiment of the invention is formed by floating an AAO template on a PLLA solution at 100°C. Residual film at the surface can be removed suitably. For comparison, a second triboelectric generator element is formed by hot pressing. In each case the second triboelectric generator element is assembled with a first triboelectric generator element as shown in Fig. 60 and the generator elements reciprocated relative to each other and the open circuit voltage and short-circuit current (peak-to-peak) recorded. In this way, it can be shown that nanowires of PLLA produce an enhanced triboelectric response in comparison with a film of the same composition. It is considered that this effect is due to the confinement of the material in the template inducing surface charge modification of the polymer.

List of non-patent references

1 K. A. Cook-Chennault, N. Thambi and A. M. Sastry, Smart Mater. Struct., 2008, 17, 43001.

2 S. Crossley, R. A. Whiter and S. Kar-Narayan, Mater. Sci. Technol., 2014, 30, 1613-1624.

3 Z. L. Wang, ACS Nano, 2013, 7, 9533-9557.

4 Z. L. Wang, J. Chen and L. Lin, Energy Environ. Sci., 2015, 8, 2250-2282.

5 F. R. Fan, Z. Q. Tian and Z. Lin Wang, Nano Energy, 2012, 1, 328-334.

6 G. Zhu, Z. Lin, Q. Jing, P. Bai, C. Pan, Y. Yang and Y. Zhou, Nano Lett., 2013, 13, 847.

7 G. Cheng, Z. Lin, L. Lin, Z. Du and Z. L. Wang, ACS Nano, 2013, 7, 7383-7391.

8 C. K. Jeong, K. M. Baek, S. Niu, T. W. Nam, Y. H. Hur, D. Y. Park, G. Hwang, M. Byun, Z. L. Wang, Y. S. Jung and K. J. Lee, Nano Lett., 2014, 14, 7031-7038.

9 H. Kang, H. Kim, S. Kim, H. J. Shin, S. Cheon, J. H. Huh, D. Y. Lee, S. Lee, S. W. Kim and J. H. Cho, Adv. Funct. Mater., 2016, 26, 7717-7724.

10 J. Henniker, Nature, 1962, 196, 474.

11 G. Zhu, C. Pan, W. Guo, C. Y. Chen, Y. Zhou, R. Yu and Z. L. Wang, Nano Lett., 2012, 12, 4960-4965.

12 S. Shin, Y. H. Kwon, Y. Kim, J. Jung, M. H. Lee and J. Nah, ACS Nano, 2015, 9, 4621-4627.

13 S. Shin, Y. E. Bae, H. K. Moon, J. Kim, S. Choi and Y. Kim, ACS Nano, 2017, 11, 6131-6138.

14 H. J. Kim, J. H. Kim, K. W. Jun, J. H. Kim, W. C. Seung, O. H. Kwon, J. Y. Park, S. W. Kim and I. K. Oh, Adv. Energy Mater., 2016, 6, 1-6.

15 T. Zhou, C. Zhang, C. B. Han, F. R. Fan, W. Tang and Z. L. Wang, ACS Appl. Mater. Interfaces, 2014, 6, 14695-14701.

16 Y. Zheng, L. Cheng, M. Yuan, Z. Wang, L. Zhang, Y. Qin and T. Jing, Nanoscale, 2014, 6, 7842-6.

17 J.-H. Lee, R. Hinchet, T. Y. Kim, H. Ryu, W. Seung, H.-J. Yoon and S.-W. Kim, Adv. Mater., 2015, 27, 5553-5558.

18 X. Pu, M. Liu, X. Chen, J. Sun, C. Du, Y. Zhang, J. Zhai, W. Hu and Z. L. Wang, Sci. Adv., 2017, 3, e1700015.

19 A. J. Lovinger, Science (80-.)., 1983, 220, 1115-1121.

20 R. A. Whiter, Y. Calahorra, C. Ou and S. Kar-Narayan, Macromol. Mater. Eng., 2016, 301, 1016-1025.

21 Y. S. Choi, J. Sung, S. J. Kang, S. H. Cho, I. Hwang, S. K. Hwang, J. Huh, H. Kim, S. Bauer and C. Park, Adv. Funct. Mater., 2012, 1-9.

22 J. W. Lee, Y. Takase, B. A. Newman and J. I. Scheinbeim, J. Polym. Sci. Part B-Polymer Phys., 1991, 29, 279-286.

23 B. A. Newman, P. Chen, K. D. Pae and J. I. Scheinbeim, J. Appl. Phys., 1980, 51, 5161-5164.

24 Y. Takase, J. W. Lee, J. I. Scheinbeim and B. A. Newman, Macromolecules, 1991, 24, 6644-6652.

25 A. Datta, Y. S. Choi, E. Chalmers, C. Ou, S. Kar-Narayan Adv. Funct. Mater., 2017, 27, 1604262.

26 P. Bai, G. Zhu, Y. S. Zhou, S. Wang, J. Ma, G. Zhang and Z. L. Wang, Nano Res., 2014, 7, 990-997.

27 K. Y. Lee, S. K. Kim, J.-H. Lee, D. Seol, M. K. Gupta, Y. Kim and S.-W. Kim, Adv. Funct. Mater., 2016, 26, 3067-3073.

28 J. I. Scheinbeim, J. Appl. Phys., 1981, 52, 5939-5942.

29 J. I. Scheinbeim, J. W. Lee and B. a Newman, Macromolecules, 1992, 25, 3729-3732.

30 S. L. Wu, J. I. Scheinbeim and B. A. Newman, J. Polym. Sci. Part B-Polymer Phys., 1999, 37, 2737-2746.

31 H. Isoda and Y. Furukawa, J. Phys. Chem. B, 2015, 119, 14309-14314.

32 Q. Zhang, Z. Mo, H. Zhang, S. Liu and S. Z. D. Cheng, Polymer (Guildf)., 2001, 42, 5543-5547.

33 Z. Zhang, M. H. Litt and L. Zhu, Macromolecules, 2016, 49, 3070-3082.

34 S. S. Nair, C. Ramesh and K. Tashiro, Macromolecules, 2006, 39, 2841-2848.

35 K. Meurisch, B. Gojdka, T. Strunskus, V. Zaporojtchenko and F. Faupel, J. Phys. D. Appl. Phys., 2012, 45, 55304.

36 M. Dhanalakshmi and J. P. Jog, Express Polym. Lett., 2008, 2, 540-545.

37 N. B. N. Wu S-L, Scheinbeim J. I., J. Polym. Sci. Part B Polym. Phys., 1996, 34, 3035-3053.

38 G. Mago, D. M. Kalyon and F. T. Fisher, J. Polym. Sci. Part B Polym. Phys., 2011, 49, 1311-1321.

39 Z. Hu, M. Tian, B. Nysten and A. M. Jonas, Nat. Mater., 2009, 8, 62-67.

40 M. C. García-Gutiérrez, A. Linares, J. J. Hernández, D. R. Rueda, T. A. Ezquerra, P. Poza and R. J. Davies, Nano Lett., 2010, 10, 1472-1476.

41 R. A. Whiter, V. Narayan and S. Kar-Narayan, Adv. Energy Mater., 2014, 4, 1400519.

42 Y. Calahorra, R. A. Whiter, Q. Jing, V. Narayan and S. Kar-Narayan, APL Mater., 2016, 4.

43 M. Steinhart, P. Goring, H. Dernaika, M. Prabhukaran, U. Gosele, E. Hempel and T. Thurn-Albrecht, Phys. Rev. Lett., 2006, 97, 1-4.

44 J. Pepin, V. Miri and J. M. Lefebvre, Macromolecules, 2016, 49, 564-573.

45 P. Frübing, A. Kremmer, R. Gerhard-Multhaupt, A. Spanoudaki and P. Pissis, J. Chem. Phys., 2006, 125, 214701-1-8.

46 C. L. Jackson and G. B. McKenna, J. Chem. Phys., 1990, 93, 9002.

47 L. H. A. S. L. Lai, J. Y. Guo, V. Petrova, G. Ramanath, Phys. Rev. Lett., 1996, 77, 99-102.

48 Q. Zhang, Z. Mo, S. Liu and H. Zhang, Macromolecules, 2000, 33, 5999-6005.

49 H. H. Yu and L. J. Fina, Macromolecules, 1994, 27, 6192-6200.

50 J. Jakeš and S. Krimm, Spectrochim. Acta Part A Mol. Spectrosc., 1971, 27, 19-34.

S1 A. Kawaguchi, I. Tokimitsu, Y. Fujiwara, M. Tabuchi and K. Monobe, J. Macromol. Sci. Part B Phys., 1981, 20, 1-20.

S2 S. Rhee and J. L. White, J. Polym. Sci. Part B Polym. Phys., 2002, 40, 2624-2640.

S3 H. Search, C. Journals, A. Contact, M. Iopscience and I. P. Address, Br. J. Appl. Phys., 1959, 10, 225-230.

S4 G. H. E. Roguet, S. Tence-Girault, S. Castagnet, J.C. Grandidier, J. Polym. Sci. Part B Polym. Phys., 2007, 45, 3046-3059.

S5 W.P. Slichter, J. Polym. Sci. Part A Polym. Chem., 1959, 36, 259-266.

S6 R. Aelion, Ann. Chim. Appl, 1948, 3, 5-61.

S11 L. J. Mathias, D. G. Powell, J. P. Autran and R. S. Porter, Macromolecules, 1990, 23, 963-967.

S13 S. Niu, S. Wang, L. Lin, Y. Liu, Y. S. Zhou, Y. Hu and Z. L. Wang, Energy Environ. Sci., 2013, 6, 3576.

S15 L. F. Brown, J. L. Mason, M. L. Klinkenborg, J. I. Scheinbeim and B. A. Newman, IEEE Trans. Ultrason. Ferroelectr. Freq. Control, 1997, 44, 1049-1059.

C31 Rajala, S.; Siponkoski, T.; Sarlin, E.; Mettänen, M.; Vuoriluoto, M.; Pammo, A.; Juuti, J.; Rojas, O.J.; Franssila, S.; Tuukkanen, S. Cellulose Nanofibril Film as a Piezoelectric Sensor Material. ACS Appl. Mater. Interfaces 2016, 8, 15607-15614.

C35 Majoinen J., Hassinen, J.; Haataja, J. S.; Rekola, H. T.; Kontturi, E.; Kostiainen, M. A.; Ras, R. H. A; Törmä, P.; Ikkala, O. Chiral Plasmonics Using Twisting along Cellulose Nanocrystals as a Template for Gold Nanoparticles. Adv. Mater. 2016, 28, 5262-5267.

C48 Hirata, T.; Nishimoto, T. DSC, DTA, and TG of Cellulose Untreated and Treated with Flame-Retardants. Thermochim. Acta. 1991, 193, 99-106.

C60 Beck-Candanedo, S.; Roman, M.; Gray, D. G. Effect of Reaction Conditions on the Properties and Behavior of Wood Cellulose Nanocrystal Suspensions. Biomacromolecules 2005, 6, 1048-1054.

**Claims**

1. A triboelectric generator having a first generator element and a second generator element, the first and second generator elements being arranged so that relative movement between them generates a potential difference between them due to a triboelectrification effect, wherein:

   the first generator element comprises a first triboelectric material having a first electron affinity; the second generator element comprises a second triboelectric material having a second electron affinity, different to the first electron affinity; and **characterised in that** the first generator element comprises a template structure having an array of channels extending in the template structure, the channels being substantially filled with the first material to define a templated array of nanowires of the first material.

2. A triboelectric generator according to claim 1 wherein the first material comprises a polar polymer, optionally wherein the first material comprises a polymer with hydrogen bonding, further optionally wherein the first material comprises a fluorinated polymer.

3. A triboelectric generator according to claim 1 or claim 2 wherein the first material comprises one or more polymers selected from the group consisting of:

   nylon
   polyurethane
   poly(methyl methacrylate) (PMMA)
   poly(methacrylic acid) (PMAA)
   poly(acrylic acid) (PAA)
   poly(vinyl alcohol) (PVA)
   poly(4-vinylphenol) (PVP)
   polyvinylfluoride (PVF)
   polyvinylidene fluoride (PVDF) and co-polymers of PVDF
   poly[(vinylidenefluoride-co-trifluoroethylene] [P(VDF-TrFE)]
   polyvinylidene fluoride hexafluoropropylene (PVDF-HFP)
   polyvinylidene fluoride chlorotrifluoroethylene (PVDF-CTFE)
   poly[(vinylidenefluoride-co-trifluoroethylene] chlorofluoroethylene (PVDF-TrFE-CFE)
   poly[(vinylidenefluoride-co-trifluoroethylene] chlorotrifluoroethylene (PVDF-TrFE-CTFE)
   poly[(vinylidenefluoride-co-trifluoroethylene] hexafluoropropylene (PVDF-TrFE-HFP)
   perfluoroalkoxy polymer (PFA)
   perfluoropolyoxetane
   poly(lactic acid) (PLA)
   poly(glycolic acid) (PGA)
   polyethylene (PE)
   polypropylene (PP)
   polyvinylchroride (PVC)
   cellulose
   poly(L-lactic acid) (PLLA)
   poly(tetrafluoroethulene) (PTFE)
   polychlorotrifluoroethylene (PCTFE).

4. A triboelectric generator according to any one of the preceding claims wherein the first material is a Nylon material, optionally wherein the Nylon material is an odd-numbered Nylon, further optionally wherein the first material is Nylon-11.

**5.** A triboelectric generator according to claim 4 wherein the first material includes the pseudo-hexagonal polymer structure or the hexagonal/pseudo-hexagonal crystal structure.

**6.** A triboelectric generator according to any one of the preceding claims wherein the degree of crystallinity of the first material is at least 30%, wherein the degree of crystallinity is determined using DSC according to the equation

$$\text{Crystallinity (\%)} = \frac{\Delta H_m}{\Delta H_m^0} \times 100 \text{ (\%)}$$

wherein $\Delta H_m$ is the equilibrium heat of fusion enthalpy of the first material and $\Delta H_m^0$ is the equilibrium heat of fusion enthalpy of the perfect crystalline equivalent composition of the first material, and wherein $\Delta H_m$ is determined from the area under the DSC melting peak.

**7.** A triboelectric generator according to any one of the preceding claims wherein the nanowires comprise concentric lamellae, oriented substantially parallel to the internal wall of the channel.

**8.** A triboelectric generator according to any one of the preceding claims wherein the nanowires of the first material are self-poled.

**9.** A triboelectric generator according to any one of the preceding claims wherein the second generator element comprises a template structure having an array of channels extending in the template structure, the channels being substantially filled with the second triboelectric material to define a templated array of nanowires of the second triboelectric material.

**10.** A triboelectric generator according to claim 9 wherein the first material is a tribo-positive material and the second material is a tribo-negative material.

**11.** A triboelectric generator according to claim 9 or claim 10 wherein the second material comprises a polar polymer, optionally wherein the second material comprises a polymer with hydrogen bonding, further optionally wherein the second material comprises a fluorinated polymer.

**12.** A triboelectric generator according to any one of claims 9 to 11 wherein the second material comprises one or more polymers selected from the group consisting of:

nylon
polyurethane
poly(methyl methacrylate) (PMMA)
poly(methacrylic acid) (PMAA)
poly(acrylic acid) (PAA)
poly(vinyl alcohol) (PVA)
poly(4-vinylphenol) (PVP)
polyvinylfluoride (PVF)
polyvinylidene fluoride (PVDF) and co-polymers of PVDF
poly[(vinylidenefluoride-co-trifluoroethylene] [P(VDF-TrFE)]
polyvinylidene fluoride hexafluoropropylene (PVDF-HFP)
polyvinylidene fluoride chlorotrifluoroethylene (PVDF-CTFE)
poly[(vinylidenefluoride-co-trifluoroethylene] chlorofluoroethylene (PVDF-TrFE-CFE)
poly[(vinylidenefluoride-co-trifluoroethylene] chlorotrifluoroethylene (PVDF-TrFE-CTFE)
poly[(vinylidenefluoride-co-trifluoroethylene] hexafluoropropylene (PVDF-TrFE-HFP)
perfluoroalkoxy polymer (PFA)
perfluoropolyoxetane
poly(lactic acid) (PLA)
poly(glycolic acid) (PGA)
polyethylene (PE)
polypropylene (PP)
polyvinylchroride (PVC)
cellulose

poly(L-lactic acid) (PLLA)
poly(tetrafluoroethulene) (PTFE)
polychlorotrifluoroethylene (PCTFE).

13. A method for the manufacture of a triboelectric generator according to any one of claims 1 to 12, the method including manufacturing the first generator element including the step:
a solution of the first material is allowed to fill an array of channels extending in a template structure by capillary wetting and the solvent is removed from the solution in the channels to solidify the first material into an array of self-poled nanowires,
the method further including the step of assembling the first generator element with the second generator element so that relative movement between them generates a potential difference between them due to a triboelectrification effect.

14. A method according to claim 13, the method including manufacturing the second generator element including the step:
a solution of the second material is allowed to fill an array of channels extending in a template structure by capillary wetting and the solvent is removed from the solution in the channels to solidify the second material into an array of self-poled nanowires.

15. A method of operating a triboelectric generator according to any one of claims 1 to 12, the method including causing relative movement between the first and second generator elements to generates a potential difference between them due to a triboelectrification effect.

## Patentansprüche

1. Triboelektrischer Generator, der ein erstes Generatorelement und ein zweites Generatorelement aufweist, wobei das erste und das zweite Generatorelement so angeordnet sind, dass eine Relativbewegung zwischen diesen aufgrund eines Triboelektrifizierungseffekts eine Potenzialdifferenz zwischen diesen erzeugt, wobei:

   das erste Generatorelement ein erstes triboelektrisches Material umfasst, das eine erste Elektronenaffinität aufweist;
   das zweite Generatorelement ein zweites triboelektrisches Material umfasst, das eine zweite Elektronenaffinität aufweist, die sich von der ersten Elektronenaffinität unterscheidet; und
   **dadurch gekennzeichnet, dass** das erste Generatorelement eine Schablonenstruktur umfasst, die eine Anordnung von Kanälen aufweist, die sich in der Schablonenstruktur erstrecken, wobei die Kanäle im Wesentlichen mit dem ersten Material gefüllt sind, um eine Schablonenanordnung von Nanodrähten aus dem ersten Material zu definieren.

2. Triboelektrischer Generator nach Anspruch 1, wobei das erste Material ein polares Polymer umfasst, wobei das erste Material gegebenenfalls ein Polymer mit Wasserstoffbrückenbindung umfasst, wobei das erste Material außerdem gegebenenfalls ein fluoriertes Polymer umfasst.

3. Triboelektrischer Generator nach Anspruch 1 oder 2, wobei das erste Material ein oder mehrere Polymere umfasst, die aus der aus folgenden bestehenden Gruppe ausgewählt sind:

   Nylon
   Polyurethan
   Poly(methylmethacrylat) (PMMA)
   Poly(methacrylsäure) (PMAA)
   Poly(acrylsäure) (PAA)
   Poly(vinylalkohol) (PVA)
   Poly(4-vinylphenol) (PVP)
   Polyvinylfluorid (PVF)
   Polyvinylidenfluorid (PVDF) und Copolymere von PVDF
   Poly[(vinylidenfluorid-co-trifluorethylen] [P(VDF-TrFE)]
   Polyvinylidenfluoridhexafluorpropylen (PVDF-HFP)
   Polyvinylidenfluoridchlortrifluorethylen (PVDF-CTFE)

Poly[(vinylidenfluorid-co-trifluorethylen]chlorfluorethylen (PVDF-TrFE-CFE)
Poly[(vinylidenfluorid-co-trifluorethylen]chlortrifluorethylen(PVDF-TrFE-CTFE)
Poly[(vinylidenfluorid-co-trifluorethylen]hexafluorpropylen (PVDF-TrFE-HFP)
Perfluoralkoxypolymer (PFA)
Perfluorpolyoxetan
Poly(milchsäure) (PLA)
Poly(glykolsäure) (PGA)
Polyethylen (PE)
Polypropylen (PP)
Polyvinylchlorid (PVC)
Cellulose
Poly(L-Milchsäure) (PLLA)
Poly(tetrafluorethylen) (PTFE)
Polychlortrifluorethylen (PCTFE).

4. Triboelektrischer Generator nach einem der vorangegangenen Ansprüche, wobei das erste Material ein Nylonmaterial ist, wobei das Nylonmaterial gegebenenfalls ein ungeradzahliges Nylon ist, wobei das erste Material außerdem gegebenenfalls Nylon-11 ist.

5. Triboelektrischer Generator nach Anspruch 4, wobei das erste Material eine pseudohexagonale Polymerstruktur oder eine hexagonale/pseudo-hexagonale Kristallstruktur umfasst.

6. Triboelektrischer Generator nach einem der vorangegangenen Ansprüche, wobei der Grad der Kristallinität des ersten Materials zumindest 30 % beträgt, wobei der Grad der Kristallinität mittels DSC gemäß folgender Gleichung ermittelt wird:

$$\text{Kristallinität (\%)} = \frac{\frac{\Delta H_m}{\Delta H_m^0} \times 100 \ (\%)}{}$$

worin $\Delta H_m$ die Gleichgewichtswärme der Schmelzenthalpie des ersten Materials ist und $\Delta H_m^0$ die Gleichgewichtswärme der Schmelzenthalpie der perfekten kristallinen äquivalenten Zu-sammensetzung aus dem ersten Material ist und wobei $\Delta H_m$ anhand der Fläche unter dem DSC-Schmelz-Peak bestimmt wird.

7. Triboelektrischer Generator nach einem der vorangegangenen Ansprüche, wobei die Nanodrähte konzentrische Lamellen umfassen, die im Wesentlichen parallel zur Innenwand des Kanals ausgerichtet sind.

8. Triboelektrischer Generator nach einem der vorangegangenen Ansprüche, wobei die Nanodrähte aus dem ersten Material selbst-gepolt sind.

9. Triboelektrischer Generator nach einem der vorangegangenen Ansprüche, wobei das zweite Generatorelement eine Schablonenstruktur umfasst, die eine Anordnung von Kanälen aufweist, die sich in der Schablonenstruktur erstrecken, wobei die Kanäle im Wesentlichen mit dem zweiten triboelektrischen Material gefüllt sind, um eine Schablonenanordnung von Nanodrähten aus dem zweiten triboelektrischen Material zu definieren.

10. Triboelektrischer Generator nach Anspruch 9, wobei das erste Material ein triboelektrisch positives Material ist und das zweite Material ein triboelektrisch negatives Material ist.

11. Triboelektrischer Generator nach Anspruch 9 oder 10, wobei das zweite Material ein polares Polymer umfasst, wobei das zweite Material gegebenenfalls ein Polymer mit Wasserstoffbrückenbindung umfasst, wobei das zweite Material außerdem gegebenenfalls ein fluoriertes Polymer umfasst.

12. Triboelektrischer Generator nach einem der Ansprüche 9 bis 11, wobei das zweite Material ein oder mehrere Polymere umfasst, die aus der aus folgenden bestehenden Gruppe ausgewählt sind:

Nylon
Polyurethan

Poly(methylmethacrylat) (PMMA)
Poly(methacrylsäure) (PMAA)
Poly(acrylsäure) (PAA)
Poly(vinylalkohol) (PVA)
Poly(4-vinylphenol) (PVP)
Polyvinylfluorid (PVF)
Polyvinylidenfluorid (PVDF) und Copolymere von PVDF
Poly[(vinylidenfluorid-co-trifluorethylen] [P(VDF-TrFE)]
Polyvinylidenfluoridhexafluorpropylen (PVDF-HFP)
Polyvinylidenfluoridchlortrifluorethylen (PVDF-CTFE)
Poly[(vinylidenfluorid-co-trifluorethylen]chlorfluorethylen (PVDF-TrFE-CFE)
Poly[(vinylidenfluorid-co-trifluorethylen]chlortrifluorethylen(PVDF-TrFE-CTFE)
Poly[(vinylidenfluorid-co-trifluorethylen]hexafluorpropylen (PVDF-TrFE-HFP)
Perfluoralkoxypolymer (PFA)
Perfluorpolyoxetan
Poly(milchsäure) (PLA)
Poly(glykolsäure) (PGA)
Polyethylen (PE)
Polypropylen (PP)
Polyvinylchlorid (PVC)
Cellulose
Poly(L-Milchsäure) (PLLA)
Poly(tetrafluorethylen) (PTFE)
Polychlortrifluorethylen (PCTFE).

13. Verfahren zur Herstellung eines triboelektrischen Generators nach einem der Ansprüche 1 bis 12, wobei das Verfahren die Herstellung des ersten Generatorelements umfasst, das folgenden Schritt umfasst:

es wird zugelassen, dass eine Lösung von dem ersten Material durch Kapillarbenetzung eine Anordnung von Kanälen füllt, die sich in einer Schablonenstruktur erstrecken, und das Lösungsmittel wird aus der Lösung in den Kanälen entfernt, um das erste Material zu einer Anordnung von selbst-gepolten Nanodrähten zu verfestigen,
wobei das Verfahren außerdem den Schritt des Zusammenfügens des ersten Generatorelements mit dem zweiten Generatorelement umfasst, so dass eine Relativbewegung zwischen diesen aufgrund eines Triboelektrifizierungseffekts eine Potenzialdifferenz zwischen diesen erzeugt.

14. Verfahren nach Anspruch 13, wobei das Verfahren die Herstellung des zweiten Generatorelements umfasst, das folgenden Schritt umfasst:
es wird zugelassen, dass eine Lösung von dem zweiten Material durch Kapillarbenetzung eine Anordnung von Kanälen füllt, die sich in einer Schablonenstruktur erstrecken, und das Lösungsmittel wird aus der Lösung in den Kanälen entfernt, um das zweite Material zu einer Anordnung von selbst-gepolten Nanodrähten zu verfestigen.

15. Verfahren zum Betreiben eines triboelektrischen Generators nach einem der Ansprüche 1 bis 12, wobei das Verfahren umfasst, dass eine Relativbewegung zwischen dem ersten und dem zweiten Generatorelement hervorgerufen wird, um aufgrund eines Triboelektrifizierungseffekts eine Potenzialdifferenz zwischen diesen zu erzeugen.

## Revendications

1. Générateur triboélectrique comportant un premier élément de générateur et un deuxième élément de générateur, les premier et deuxième éléments de générateur étant agencés de sorte que le mouvement relatif entre ceux-ci génère une différence de potentiel entre ceux-ci en raison d'un effet de triboélectrification, dans lequel :

le premier élément de générateur comprend un premier matériau triboélectrique ayant une première affinité électronique ;
le deuxième élément de générateur comprend un deuxième matériau triboélectrique ayant une deuxième affinité électronique, différente de la première affinité électronique ; et

**caractérisé en ce que** le premier élément de générateur comprend une structure de gabarit comportant un réseau de canaux s'étendant dans la structure de gabarit, les canaux étant sensiblement remplis avec le premier matériau pour définir un réseau gabarié de nanocâbles du premier matériau.

2. Générateur triboélectrique selon la revendication 1 dans lequel le premier matériau comprend un polymère polaire, facultativement dans lequel le premier matériau comprend un polymère avec liaison hydrogène, en outre, facultativement, dans lequel le premier matériau comprend un polymère fluoré.

3. Générateur triboélectrique selon la revendication 1 ou la revendication 2 dans lequel le premier matériau comprend un ou plusieurs polymères choisis dans le groupe constitué de :

nylon
polyuréthane
poly(méthacrylate de méthyle) (PMMA)
poly(acide méthacrylique) (PMAA)
poly(acide acrylique) (PAA)
poly(alcool vinylique) (PVA)
poly(4-vinylphénol) (PVP)
poly(fluorure de vinyle) (PVF)
poly(fluorure de vinylidène) (PVDF) et copolymères de PVDF
poly[(fluorure de vinylidène)-co-trifluoroéthylène] [P(VDF-TrFE)]
poly(fluorure de vinylidène)-hexafluoropropylène (PVDF-HFP)
poly(fluorure de vinylidène)-chlorotrifluoroéthylène (PVDF-CTFE)
poly[(fluorure de vinylidène)-co-trifluoroéthylène]-chlorofluoroéthylène (PVDF-TrFE-CFE)
poly[(fluorure de vinylidène)-co-trifluoroéthylène]-chlorotrifluoroéthylène (PVDF-TrFE-CTFE)
poly[(fluorure de vinylidène)-co-trifluoroéthylène]-hexafluoropropylène (PVDF-TrFE-HFP)
perfluoroalcoxypolymère (PFA)
perfluoropolyoxétane
poly(acide lactique) (PLA)
poly(acide glycolique) (PGA)
polyéthylène (PE)
polypropylène (PP)
poly(chlorure de vinyle) (PVC)
cellulose
poly(acide L-lactique) (PLLA)
poly(tétrafluoroéthylène) (PTFE)
polychlorotrifluoroéthylène (PCTFE).

4. Générateur triboélectrique selon l'une quelconque des revendications précédentes dans lequel le premier matériau est un matériau de nylon, facultativement dans lequel le matériau de nylon est un nylon de numéro impair, en outre, facultativement, dans lequel le premier matériau est le nylon-11.

5. Générateur triboélectrique selon la revendication 4 dans lequel le premier matériau comprend la structure de polymère pseudohexagonale ou la structure de cristal hexagonale/pseudohexagonale.

6. Générateur triboélectrique selon l'une quelconque des revendications précédentes dans lequel le degré de cristallinité du premier matériau est au moins 30 %, dans lequel le degré de cristallinité est déterminé en utilisant la DSC selon l'équation

$$\text{Cristallinité (\%)} = \frac{\Delta H_m}{\Delta H_m^0} \times 100 \ (\%)$$

dans laquelle $\Delta H_m$ est l'enthalpie de fusion à l'équilibre du premier matériau et $\Delta H_m^0$ est l'enthalpie de fusion à l'équilibre de la composition équivalente parfaitement cristalline du premier matériau, et dans laquelle $\Delta H_m$ est déterminé à partir de l'aire sous le pic de fusion de DSC.

7. Générateur triboélectrique selon l'une quelconque des revendications précédentes dans lequel les nanocâbles comprennent des lamelles concentriques, orientées de façon sensiblement parallèle à la paroi interne du canal.

8. Générateur triboélectrique selon l'une quelconque des revendications précédentes dans lequel les nanocâbles du premier matériau sont autopolarisés.

9. Générateur triboélectrique selon l'une quelconque des revendications précédentes dans lequel le deuxième élément de générateur comprend une structure de gabarit ayant un réseau de canaux s'étendant dans la structure de gabarit, les canaux étant sensiblement remplis avec le deuxième matériau triboélectrique pour définir un réseau de gabarit de nanocâbles du deuxième matériau triboélectrique.

10. Générateur triboélectrique selon la revendication 9 dans lequel le premier matériau est un matériau tribopositif et le deuxième matériau est un matériau tribonégatif.

11. Générateur triboélectrique selon la revendication 9 ou la revendication 10 dans lequel le deuxième matériau comprend un polymère polaire, facultativement dans lequel le deuxième matériau comprend un polymère avec liaison hydrogène, en outre, facultativement, dans lequel le deuxième matériau comprend un polymère fluoré.

12. Générateur triboélectrique selon l'une quelconque des revendications 9 à 11 dans lequel le deuxième matériau comprend un ou plusieurs polymères choisis dans le groupe constitué de :

nylon
polyuréthane
poly(méthacrylate de méthyle) (PMMA)
poly(acide méthacrylique) (PMAA)
poly(acide acrylique) (PAA)
poly(alcool vinylique) (PVA)
poly(4-vinylphénol) (PVP)
poly(fluorure de vinyle) (PVF)
poly(fluorure de vinylidène) (PVDF) et copolymères de PVDF
poly[(fluorure de vinylidène)-co-trifluoroéthylène] [P(VDF-TrFE)]
poly(fluorure de vinylidène)-hexafluoropropylène (PVDF-HFP)
poly(fluorure de vinylidène)-chlorotrifluoroéthylène (PVDF-CTFE)
poly[(fluorure de vinylidène)-co-trifluoroéthylène]-chlorofluoroéthylène (PVDF-TrFE-CFE)
poly[(fluorure de vinylidène)-co-trifluoroéthylène]-chlorotrifluoroéthylène (PVDF-TrFE-CTFE)
poly[(fluorure de vinylidène)-co-trifluoroéthylène]-hexafluoropropylène (PVDF-TrFE-HFP)
perfluoroalcoxypolymère (PFA)
perfluoropolyoxétane
poly(acide lactique) (PLA)
poly(acide glycolique) (PGA)
polyéthylène (PE)
polypropylène (PP)
poly(chlorure de vinyle) (PVC)
cellulose
poly(acide L-lactique) (PLLA)
poly(tétrafluoroéthylène) (PTFE)
polychlorotrifluoroéthylène (PCTFE).

13. Procédé de fabrication d'un générateur triboélectrique selon l'une quelconque des revendications 1 à 12, le procédé comprenant la fabrication du premier élément de générateur comprenant l'étape suivante :
on laisse une solution du premier matériau remplir un réseau de canaux s'étendant dans une structure de gabarit par mouillage capillaire et le solvant est éliminé de la solution dans les canaux pour solidifier le premier matériau en un réseau de nanocâbles autopolarisés, le procédé comprenant en outre l'étape d'assemblage du premier élément de générateur avec le deuxième élément de générateur de sorte que le mouvement relatif entre ceux-ci génère une différence de potentiel entre ceux-ci en raison d'un effet de triboélectrification.

14. Procédé selon la revendication 13, le procédé comprenant la fabrication du deuxième élément de générateur comprenant l'étape suivante :

on laisse une solution du deuxième matériau remplir un réseau de canaux s'étendant dans une structure de gabarit par mouillage capillaire et le solvant est éliminé de la solution dans les canaux pour solidifier le deuxième matériau en un réseau de nanocâbles autopolarisés.

15. Procédé de fonctionnement d'un générateur triboélectrique selon l'une quelconque des revendications 1 à 12, le procédé comprenant la commande d'un mouvement relatif entre les premier et deuxième éléments de générateur pour générer une différence de potentiel entre ceux-ci en raison d'un effet de triboélectrification.

Fig. 1

| | |
|---|---|
| Air | Biological |
| Human skin | |
| Human hair | |
| **Nylon** | Synthetic |
| Wool | Natural & biological |
| Fur | |
| Silk | |

Aluminium

Polyethylene

Kapton

PDMS

Teflon

Fig. 2

Fig. 3

Fig. 4

Fig. 5

Fig. 6

Fig. 7

Fig. 8

Fig. 10

Fig. 9

500nm

Fig. 11

Fig. 12

gas flow

AAO template

solution

0.2

Velocity (m/s)

0

Fig. 13

air

Nylon solution

0.2

Velocity (m/s)

0

Fig. 14

Fig. 15

Fig. 16

Fig. 17

Fig. 18

Fig. 19A

Fig. 19B

Fig. 19C

Fig. 20

Fig. 21

Fig. 22

Draw direction

IR spectra direction

Nylon film

Fig. 23

Nylon NW mat

Fig. 24

Fig. 25

Fig. 26

Fig. 27

**Fig. 28**

**Fig. 29**

Fig. 30

**Fig. 31**
PTFE
Aluminium

**Fig. 32**
PTFE
Nylon film

**Fig. 33**
PTFE
Nylon NWs    Alumina

Potential (V)
37
-30

**Fig. 34**
Air
P
Self-poled Nylon nanowire    Alumina

Potential (V)
34
20

EP 3 659 249 B1

## Fig. 35

Area=-0.0413
FWHM=0.00311

Area=0.04078
FWHM=0.00707

$I_{SC}$ (μA)

Time (sec)

## Fig. 36

Area=-0.05522
FWHM=0.00362

Area=0.05349
FWHM=0.00479

$I_{SC}$ (μA)

Time (sec)

## Fig. 37

Area=-0.07074
FWHM=0.00487

Area=0.07243
FWHM=0.00289

$I_{SC}$ (μA)

Time (sec)

Fig. 38

Fig. 39

Fig. 40

Fig. 41

Fig. 42

Fig. 43

20µm

Fig. 44

2µm

Fig. 45

Fig. 46

Fig. 47

Fig. 48

Fig. 49

Fig. 50

Fig.51

Fig.52

Fig. 53

100 nm

25 µm

Fig. 54

Fig. 55

Fig. 56(a)

Fig. 56(c)

Fig. 56(b)

Fig. 56(d)

Fig. 57

Fig. 58

Fig. 59

EP 3 659 249 B1

Fig. 60

Fig. 61

polymer film

Fig. 62

polymer NW

Fig. 63

Fig. 64

Fig. 65

Fig. 66

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SIWEN CUI.** Conducting polymer PPy nanowire-based triboelectric nanogenerator and its application for self-powered electrochemical cathodic protection. *CHEMICAL SCIENCE,* June 2016, vol. 7, 6477-6483
- **K. A. COOK-CHENNAULT ; N. THAMBI ; A. M. SASTRY.** *Smart Mater. Struct.,* 2008, vol. 17, 43001
- **S. CROSSLEY ; R. A. WHITER ; S. KAR-NARAYAN.** *Mater. Sci. Technol.,* 2014, vol. 30, 1613-1624
- **Z. L. WANG.** *ACS Nano,* 2013, vol. 7, 9533-9557
- **Z. L. WANG ; J. CHEN ; L. LIN.** *Energy Environ. Sci.,* 2015, vol. 8, 2250-2282
- **F. R. FAN ; Z. Q. TIAN ; Z. LIN WANG.** *Nano Energy,* 2012, vol. 1, 328-334
- **G. ZHU ; Z. LIN ; Q. JING ; P. BAI ; C. PAN ; Y. YANG ; Y. ZHOU.** *Nano Lett.,* 2013, vol. 13, 847
- **G. CHENG ; Z. LIN ; L. LIN ; Z. DU ; Z. L. WANG.** *ACS Nano,* 2013, vol. 7, 7383-7391
- **C. K. JEONG ; K. M. BAEK ; S. NIU ; T. W. NAM ; Y. H. HUR ; D. Y. PARK ; G. HWANG ; M. BYUN ; Z. L. WANG ; Y. S. JUNG.** *Nano Lett.,* 2014, vol. 14, 7031-7038
- **H. KANG ; H. KIM ; S. KIM ; H. J. SHIN ; S. CHEON ; J. H. HUH ; D. Y. LEE ; S. LEE ; S. W. KIM ; J. H. CHO.** *Adv. Funct. Mater.,* 2016, vol. 26, 7717-7724
- **J. HENNIKER.** *Nature,* 1962, vol. 196, 474
- **G. ZHU ; C. PAN ; W. GUO ; C. Y. CHEN ; Y. ZHOU ; R. YU ; Z. L. WANG.** *Nano Lett.,* 2012, vol. 12, 4960-4965
- **S. SHIN ; Y. H. KWON ; Y. KIM ; J. JUNG ; M. H. LEE ; J. NAH.** *ACS Nano,* 2015, vol. 9, 4621-4627
- **S. SHIN ; Y. E. BAE ; H. K. MOON ; J. KIM ; S. CHOI ; Y. KIM.** *ACS Nano,* 2017, vol. 11, 6131-6138
- **H. J. KIM ; J. H. KIM ; K. W. JUN ; J. H. KIM ; W. C. SEUNG ; O. H. KWON ; J. Y. PARK ; S. W. KIM ; I. K. OH.** *Adv. Energy Mater.,* 2016, vol. 6, 1-6
- **T. ZHOU ; C. ZHANG ; C. B. HAN ; F. R. FAN ; W. TANG ; Z. L. WANG.** *ACS Appl. Mater. Interfaces,* 2014, vol. 6, 14695-14701
- **Y. ZHENG ; L. CHENG ; M. YUAN ; Z. WANG ; L. ZHANG ; Y. QIN ; T. JING.** *Nanoscale,* 2014, vol. 6, 7842-6

- **J.-H. LEE ; R. HINCHET ; T. Y. KIM ; H. RYU ; W. SEUNG ; H.-J. YOON ; S.-W. KIM.** *Adv. Mater.,* 2015, vol. 27, 5553-5558
- **X. PU ; M. LIU ; X. CHEN ; J. SUN ; C. DU ; Y. ZHANG ; J. ZHAI ; W. HU ; Z. L. WANG.** *Sci. Adv.,* 2017, vol. 3, e1700015
- **A. J. LOVINGER.** *Science (80-.),* 1983, vol. 220, 1115-1121
- **R. A. WHITER ; Y. CALAHORRA ; C. OU ; S. KAR-NARAYAN.** *Macromol. Mater. Eng.,* 2016, vol. 301, 1016-1025
- **Y. S. CHOI ; J. SUNG ; S. J. KANG ; S. H. CHO ; I. HWANG ; S. K. HWANG ; J. HUH ; H. KIM ; S. BAUER ; C. PARK.** *Adv. Funct. Mater.,* 2012, 1-9
- **J. W. LEE ; Y. TAKASE ; B. A. NEWMAN ; J. I. SCHEINBEIM.** *J. Polym. Sci. Part B-Polymer Phys.,* 1991, vol. 29, 279-286
- **B. A. NEWMAN ; P. CHEN ; K. D. PAE ; J. I. SCHEINBEIM.** *J. Appl. Phys.,* 1980, vol. 51, 5161-5164
- **Y. TAKASE ; J. W. LEE ; J. I. SCHEINBEIM ; B. A. NEWMAN.** *Macromolecules,* 1991, vol. 24, 6644-6652
- **A. DATTA ; Y. S. CHOI ; E. CHALMERS ; C. OU ; S. KAR-NARAYAN.** *Adv. Funct. Mater.,* 2017, vol. 27, 1604262
- **P. BAI ; G. ZHU ; Y. S. ZHOU ; S. WANG ; J. MA ; G. ZHANG ; Z. L. WANG.** *Nano Res.,* 2014, vol. 7, 990-997
- **K. Y. LEE ; S. K. KIM ; J.-H. LEE ; D. SEOL ; M. K. GUPTA ; Y. KIM ; S.-W. KIM.** *Adv. Funct. Mater.,* 2016, vol. 26, 3067-3073
- **J. I. SCHEINBEIM.** *J. Appl. Phys.,* 1981, vol. 52, 5939-5942
- **J. I. SCHEINBEIM ; J. W. LEE ; B. A NEWMAN.** *Macromolecules,* 1992, vol. 25, 3729-3732
- **S. L. WU ; J. I. SCHEINBEIM ; B. A. NEWMAN.** *J. Polym. Sci. Part B-Polymer Phys.,* 1999, vol. 37, 2737-2746
- **H. ISODA ; Y. FURUKAWA.** *J. Phys. Chem. B,* 2015, vol. 119, 14309-14314
- **Q. ZHANG ; Z. MO ; H. ZHANG ; S. LIU ; S. Z. D. CHENG.** *Polymer (Guildf).,* 2001, vol. 42, 5543-5547
- **Z. ZHANG ; M. H. LITT ; L. ZHU.** *Macromolecules,* 2016, vol. 49, 3070-3082
- **S. S. NAIR ; C. RAMESH ; K. TASHIRO.** *Macromolecules,* 2006, vol. 39, 2841-2848

- **K. MEURISCH ; B. GOJDKA ; T. STRUNSKUS ; V. ZAPOROJTCHENKO ; F. FAUPEL.** *J. Phys. D. Appl. Phys.,* 2012, vol. 45, 55304
- **M. DHANALAKSHMI ; J. P. JOG.** *Express Polym. Lett.,* 2008, vol. 2, 540-545
- **N. B. N. WU S-L ; SCHEINBEIM J. I.** *J. Polym. Sci. Part B Polym. Phys.,* 1996, vol. 34, 3035-3053
- **G. MAGO ; D. M. KALYON ; F. T. FISHER.** *J. Polym. Sci. Part B Polym. Phys.,* 2011, vol. 49, 1311-1321
- **Z. HU ; M. TIAN ; B. NYSTEN ; A. M. JONAS.** *Nat. Mater.,* 2009, vol. 8, 62-67
- **M. C. GARCÍA-GUTIÉRREZ ; A. LINARES ; J. J. HERNÁNDEZ ; D. R. RUEDA ; T. A. EZQUERRA ; P. POZA ; R. J. DAVIES.** *Nano Lett.,* 2010, vol. 10, 1472-1476
- **R. A. WHITER ; V. NARAYAN ; S. KAR-NARAYAN.** *Adv. Energy Mater.,* 2014, vol. 4, 1400519
- **Y. CALAHORRA ; R. A. WHITER ; Q. JING ; V. NARAYAN ; S. KAR-NARAYAN.** *APL Mater.,* 2016, vol. 4
- **M. STEINHART ; P. GORING ; H. DERNAIKA ; M. PRABHUKARAN ; U. GOSELE ; E. HEMPEL ; T. THURN-ALBRECHT.** *Phys. Rev. Lett.,* 2006, vol. 97, 1-4
- **J. PEPIN ; V. MIRI ; J. M. LEFEBVRE.** *Macromolecules,* 2016, vol. 49, 564-573
- **P. FRÜBING ; A. KREMMER ; R. GERHARD-MULTHAUPT ; A. SPANOUDAKI ; P. PISSIS.** *J. Chem. Phys.,* 2006, vol. 125, 214701-1, 8
- **C. L. JACKSON ; G. B. MCKENNA.** *J. Chem. Phys.,* 1990, vol. 93, 9002
- **L. H. A. S. L. LAI ; J. Y. GUO ; V. PETROVA ; G. RAMANATH.** *Phys. Rev. Lett.,* 1996, vol. 77, 99-102
- **Q. ZHANG ; Z. MO ; S. LIU ; H. ZHANG.** *Macromolecules,* 2000, vol. 33, 5999-6005
- **H. H. YU ; L. J. FINA.** *Macromolecules,* 1994, vol. 27, 6192-6200
- **J. JAKEŠ ; S. KRIMM.** *Spectrochim. Acta Part A Mol. Spectrosc.,* 1971, vol. 27, 19-34
- **A. KAWAGUCHI ; I. TOKIMITSU ; Y. FUJIWARA ; M. TABUCHI ; K. MONOBE.** *J. Macromol. Sci. Part B Phys.,* 1981, vol. 20, 1-20
- **S. RHEE ; J. L. WHITE.** *J. Polym. Sci. Part B Polym. Phys.,* 2002, vol. 40, 2624-2640
- **H. SEARCH ; C. JOURNALS ; A. CONTACT ; M. LOPSCIENCE ; I. P. ADDRESS.** *Br. J. Appl. Phys.,* 1959, vol. 10, 225-230
- **G. H. E. ROGUET ; S. TENCE-GIRAULT ; S. CASTAGNET ; J.C. GRANDIDIER.** *J. Polym. Sci. Part B Polym. Phys.,* 2007, vol. 45, 3046-3059
- **W.P. SLICHTER.** *J. Polym. Sci. Part A Polym. Chem.,* 1959, vol. 36, 259-266
- **R. AELION.** *Ann. Chim. Appl,* 1948, vol. 3, 5-61
- **L. J. MATHIAS ; D. G. POWELL ; J. P. AUTRAN ; R. S. PORTER.** *Macromolecules,* 1990, vol. 23, 963-967
- **S. NIU ; S. WANG ; L. LIN ; Y. LIU ; Y. S. ZHOU ; Y. HU ; Z. L. WANG.** *Energy Environ. Sci.,* 2013, vol. 6, 3576
- **L. F. BROWN ; J. L. MASON ; M. L. KLINKENBORG ; J. I. SCHEINBEIM ; B. A. NEWMAN.** *IEEE Trans. Ultrason. Ferroelectr. Freq. Control,* 1997, vol. 44, 1049-1059
- **RAJALA, S. ; SIPONKOSKI, T. ; SARLIN, E. ; METTÄNEN, M. ; VUORILUOTO, M. ; PAMMO, A ; JUUTI, J. ; ROJAS, O.J. ; FRANSSILA, S ; TUUKKANEN, S.** Cellulose Nanofibril Film as a Piezoelectric Sensor Material. *ACS Appl. Mater. Interfaces,* 2016, vol. 8, 15607-15614
- **MAJOINEN J. ; HASSINEN, J. ; HAATAJA, J. S. ; REKOLA, H. T. ; KONTTURI, E. ; KOSTIAINEN, M. A. ; RAS, R. H. A ; TÖRMÄ, P. ; IKKALA, O.** Chiral Plasmonics Using Twisting along Cellulose Nanocrystals as a Template for Gold Nanoparticles. *Adv. Mater.,* 2016, vol. 28, 5262-5267
- **HIRATA, T. ; NISHIMOTO, T.** DSC, DTA, and TG of Cellulose Untreated and Treated with Flame-Retardants. *Thermochim. Acta.,* 1991, vol. 193, 99-106
- **BECK-CANDANEDO, S. ; ROMAN, M. ; GRAY, D. G.** Effect of Reaction Conditions on the Properties and Behavior of Wood Cellulose Nanocrystal Suspensions. *Biomacromolecules,* 2005, vol. 6, 1048-1054